# EUROPEAN PATENT SPECIFICATION

(11) **EP 2 702 745 B1**
(45) Date of publication and mention of the grant of the patent: **08.04.2015**
(21) Application number: 12723986.1
(22) Date of filing: 27.04.2012
(51) Int. Cl.: H04W 12/06, H04L 29/06

(54) **SSO FRAMEWORK FOR MULTIPLE SSO TECHNOLOGIES**
SSO-RAHMEN FÜR MEHRERE SSO-TECHNOLOGIEN
CADRE SSO POUR TECHNOLOGIES SSO MULTIPLES

(30) Priority: 28.04.2011 US 201161480137 P; 17.10.2011 US 201161548156 P
(43) Date of publication of application: 05.03.2014
(73) Proprietor: Interdigital Patent Holdings, Inc., Wilmington, DE 19809 (US)
(72) Inventor: SHAH, Yogendra, C., Exton, PA 19341 (US); SCHMIDT, Andreas, 60439 Frankfurt Am Main (DE); CHA, Inhyok, Seoul (KR); GUCCIONE, Louis, J., East Chester, NY 10709 (US); LEICHER, Andreas, 60385 Frankfurt (DE)
(74) Representative: Meissner, Bolte & Partner GbR
(86) International application number: PCT/US2012/035540
(87) International publication number: WO 2012/149384

(56) References cited:
- 3G Americas: "Security And Trust in Mobile Applications", , 1 October 2008 (2008-10-01), pages 1-29, XP55035436, Retrieved from the Internet: URL:http://www.4gamericas.org/userfiles/Fi le/3G_Americas_Security_and_Trust_in_Mobil e_Applications_October_2008.pdf [retrieved on 2012-08-13]
- DO VAN THANH ET AL: "Authentication in a Multi-access IMS Environment", NETWORKING AND COMMUNICATIONS, 2008. WIMOB '08. IEEE INTERNATIONAL CONFERENCE ON WIRELESS AND MOBILE COMPUTING, IEEE, PISCATAWAY, NJ, USA, 12 October 2008 (2008-10-12), pages 613-618, XP031350788, ISBN: 978-0-7695-3393-3
- Andreas Schmidt ET AL: "Efficient Application Single-Sign-On for Evolved Mobile Networks", Proceedings of the Wireless World Research Forum Meeing 25 (WWRF 25), November 2010 (2010-11), XP55035437, Retrieved from the Internet: URL:http://andreas.schmidt.novalyst.de/doc s/WWRF_25_Efficient_SSO_for_3G_Networks.pd f [retrieved on 2012-08-13]

## Description

### BACKGROUND

Mobile user security requirements are increasing due to the increasing use of smart phone access to internet services. For example, banking services, ticket dispensing services for entertainment events, and the like may require integrity, confidentiality protection, and user authentication. Such requirements may impose the burden of authentication directly on the user in the form of usernames, pins, and passwords. However, possessing numerous accounts, with separate user-provided credentials for each, may potentially place an undue authentication burden in terms of, for example, credential fatigue on users. If users attempt to simplify the process by using credentials that are easy to remember or by reusing the same credentials across more than one domain, then the users may create security vulnerabilities.

The publication 3G Americas: "Security And Trust in Mobile Applications", October 2008, (retrieved from http://www.4gamericas.org/userfiles/File/

3G_Americas_Security_and_Trus_in_Mobile_Applications_October_2008.pdf) discloses the use of an identity selector application that enables the user to select among different identities to access services. The mobile network operators can deploy various security tokens with different assurance levels in the identity selector based on different security needs of mobile applications. The identity selector can support multiple federation models and protocols to address different mobile application requirements.

The publication "Authentication in a Multi-access IMS Environment", Do van Than et al, in the proceedings of the 4th IEEE International Conference on Wireless & Mobile Computing, Networking & Communication 2008, pages 613-618, ISBN: 978-0-7695-3393-3 discloses mobile devices supporting multiple authentication protocols to authenticate to an identity provider in order to get access to application service providers.

The document by Andreas Schmidt et al: "Efficient Application Single-Sign-On for Evolved Mobile Networks", in the proceedings of the Wireless World Research Forum Meeting 25, November 2010 (retrieved from http://andreas.schmidt.novalyst.de/docs/WWRF_25_Efficient_SSO_for_3G_Networks.pdf) discloses the use of a local assertion provider in user equipment that is able to authenticate the user and generate assertions for authenticate to service providers.

### SUMMARY

This Summary is provided to introduce various concepts in a simplified form that are further described below in the Detailed Description. This Summary is not intended to identify key features or essential features of the claimed subject matter, nor is it intended to be used to limit the scope of the claimed subject matter.

Disclosed herein is a unified framework for managing multiple authentication methods for mobile users through a unified user interface, and a protocol layer interface for different authentication protocols. Both the unified framework and the protocol layer may enable seamless authentication services to end users. Additionally, an embodiment involving multiple access domains supporting multiple service providers is also disclosed.

The embodiments described herein may provide an overall single sign-on (SSO) architecture that may allow for a flexible and/or seamless experience to the user. A user authentication interface may serve as a boundary between a user/application entity (*e.g.,* browser or non-browser application) and an SSO subsystem. In an example embodiment, the SSO subsystem may be controlled by a Mobile Network Operator (MNO). The SSO subsystem may support a variety of user multi-factor credential inputs, such as biometrics, passwords, PINs, and/or other user credential inputs for example. The user authentication interface may also provide for varying authentication strength levels. A network authentication interface may serve as the boundary between the SSO subsystem and an array of network-assisted authentication technologies or protocol modules that may allow for the accommodation of several SSO mechanisms within a single structural framework. A functional structure may provide for the separation of user-assisted authentication from the network-assisted authentication *(e.g.,* SSO network-assisted authentication), while authenticating with service providers such as, for example, OpenID relying parties.

In an example embodiment, a user equipment (UE) may comprise a user application configured to communicate with a service provider to access a service. The UE may further comprise a plurality of network-assisted authentication modules. Each network-assisted authentication module may correspond to a different network-assisted authentication protocol. For example, the network-assisted authentication modules may be configured to perform network-assisted authentication with a service provider to access a service. The UE may further comprise a single sign-on (SSO) subsystem configured to authenticate a user of the UE based on user-assisted authentication information at the UE and/or network. The SSO subsystem may further operate to select a network-assisted authentication module of the plurality of network-assisted authentication modules for performing the network-assisted authentication with the service provider. The SSO subsystem further may be configured to perform the user-assisted authentication and select the network-assisted authentication module based on one more policies. In another example embodiment, the UE may detect one or more data fields of a service provider. In response to detecting the data fields, a supplicant of the UE may automatically populate the data fields with corresponding authentication data.

Other features of the system, methods and instrumentalities described herein are provided in the following detailed description and accompanying drawings.

### BRIEF DESCRIPTION OF THE DRAWINGS

Figure 1A is a system diagram of an example communications system in which one or more disclosed embodiments may be implemented;
Figure 1B is a system diagram of an example wireless transmit/receive unit (WTRU) that may be used within the communications system illustrated in Figure 1A;
Figure 1C is a system diagram of an example radio access network and an example core network that may be used within the communications system illustrated in Figure 1A;
Figure 2 illustrates an example embodiment of an architectural framework for the use of multiple SSO technologies;
Figures 3A and 3B illustrate example embodiments of protocol flows for an SSO framework architecture;
Figure 4 illustrates another example embodiment of an architectural framework for the use of multiple SSO protocols;
Figure 5 is a block diagram of an exemplary SSO subsystem using GBA interworking in accordance with an example embodiment;
Figure 6 illustrates an example embodiment of an architectural framework comprising a downloadable component for facilitating the use of multiple SSO protocols;
Figure 7 shows a block diagram of an example embodiment of an SSO system with interface components;
Figure 8 illustrates an example embodiment of a protocol flow for SSO framework architecture with a supplicant;
Figure 9 shows an example embodiment of a protocol flow for an SSO framework architecture with a local assertion entity (LAE);
Figure 10 shows an example embodiment of a protocol flow for an SSO framework architecture with an integrated OP;
Figure 11 shows an example embodiment of a protocol flow for an SSO framework architecture with pre-fetching;
Figure 12 shows an example embodiment of a protocol flow for an SSO framework architecture with Java applets stored in the service provider;
Figure 13 shows an example embodiment of a protocol flow for an SSO framework architecture with a cached Java applet;
Figure 14 shows an example embodiment of a protocol flow for an SSO framework architecture with on-the-fly provisioning; and
Figure 15 shows an example embodiment of a protocol flow for an SSO framework architecture with an integrated toolkit.

### DETAILED DESCRIPTION OF ILLUSTRATIVE EMBODIMENTS

Users, such as mobile users for example, may desire useable security and/or a seamless means for accessing internet services whereby user interaction in the provisioning of credentials may be minimized or even eliminated entirely. In an example embodiment, Single Sign-On (SSO) identity management (IdM) may include a means, for providing SSO implementations with various characteristics, by which the user may be provided with such ease of use, while enabling user-assisted and network-assisted authentication for access to desired services. User-assisted authentication may refer to authentication in which an input from a user is used. Such a user input may be semi-automated *(e.g.,* stored in a browser) or input by the user. For example, user-assisted authentication may be based on a parameter the user knows *(e.g.,* username, password) and/or a characteristic of the user (*e.g.,* dynamic signature, iris scan, fingerprint, or other biometric measurement). Network-assisted authentication may refer to user authentication that may be based on an entity that the user may own *(e.g.,* a UICC comprising cryptographic keys and protocols). For example, network-assisted authentication may refer to SSO authentication of the user by re-use of functions which may be provided by a network operator for network access *(e.g.,* the Generic Bootstrapping Architecture (GBA) protocol). For example, GBA may generate an SSO authentication based on re-use of a secret key and protocols *(e.g.,* in a UICC) which may provide access to cellular networks and/or IMS. Each user-assisted authentication input and network-assisted authentication input may be referred to as an authentication factor. Various characteristics of SSO implementations may include, for example, SSO with seamless authentication factors, SSO with a single credential set, and a full SSO. SSO with seamless authentication factors may refer to network-assisted user authentication that proceeds automatically (*e.g.,* without user interaction) after a successful user-assisted authentication. SSO with a single credential set may refer to an implementation in which a user may use a single set of credentials (*e.g.,* for user-assisted authentication) to authenticate with multiple service providers. In an example embodiment, the single set of credentials may be provided each time the user access a different service provider. In an example embodiment using a full SSO implementation, a user may be authenticated for access to a service provider and subsequently may gain access to other service providers without being prompted to authenticate again. For example, a full SSO implementation may include SSO with seamless authentication factors.

Described herein is a unified framework for managing one or more authentication methods for mobile users through a unified user interface, and a protocol layer interface for different authentication protocols. Both the unified framework and the protocol layer may enable seamless authentication services to end users. Additionally, an embodiment involving multiple access domains supporting multiple service providers is also described.

The embodiments described herein may provide an overall SSO architecture that may allow for a flexible and/or seamless experience to the user. A user authentication interface may serve as a boundary between a user/application entity (*e.g.,* browser or non-browser application) and an SSO subsystem. In an example embodiment, the SSO subsystem may be controlled by a Mobile Network Operator (MNO). The SSO subsystem may support a variety of user multi-factor credential inputs, such as biometrics, passwords, PINs, and/or other user credential inputs for example. The user authentication interface may also provide for varying authentication strength levels. A network authentication interface may serve as the boundary between the SSO subsystem and an array of network-assisted authentication technologies or protocol modules that may allow for the accommodation of several SSO mechanisms within a single structural framework. A functional structure may provide for the separation of user-assisted authentication from the network-assisted authentication (*e.g.,* SSO network-assisted authentication).

The SSO subsystem may provide for the storage and/or processing of user credentials, where such storage may be on or off of a trusted computing environment (*e.g.,* a UICC, a smart card, or other secure trusted environment) and may provide for multiple security levels. The storage included on a trusted computing environment may support reuse of user credentials. The SSO subsystem may serve as a proxy in carrying out functions and/or policies of an external stakeholder *(e.g.,* an MNO) in determining security levels to enforce and deciding on SSO protocols to use. From an implementation standpoint, there may not be demarcation of any SSO function to be situated either on or off of the secure trusted environment (*e.g.,* a UICC, a smart card, or other secure trusted environment).

An example implementation may provide for separate, isolated SSO clients. In an example embodiment, each SSO client may serve a different service provider but in a way that may allow policy-based management of the multiple available connection protocols and/or services provided by the same provider concurrently.

Another example implementation may allow for a multitude of Local Assertion Entities (LAEs). An LAE may refer to a functional entity located on a UE. For example, a LAE may provide trusted assertions about user identity and/or authentication to a remote entity. In an example embodiment, a local OP may refer to an instantiation of an LAE for providing OpenID assertions to an RP. Each LAE may be implemented in an access-technology-specific domain on the UICC and each may be dedicated to one isolated domain. The same access technology may be multiplexed between the different LAEs or different access technologies may be used by the LAEs concurrently. Depending on the implementation, the relationship between LAEs and SSO clients may be one-to-one or where one SSO client may control or be served by multiple LAEs.

Embodiments described herein may facilitate execution of authentication protocols in a wireless device. For example, a supplicant may be used to facilitate execution of an OpenID authentication process for a wireless device and a network entity, such as a relying party (RP) or an OpenID Identity Provider Server (OP) for example. According to an example embodiment, a supplicant may be implemented as a Java applet. A supplicant may enable network-assisted authentication mechanisms, which may not be natively supported by non-browser applications or browser applications, to be used for authentication schemes such as OpenID authentication. For example, a supplicant may interface with a single sign-on (SSO) subsystem which in turn may interface to network-assisted authentication protocols such as GBA, AKA, SIP Digest, and EAP-SIM. Given the wide range of platform processor architectures, operating systems, and software available on mobile devices such as, for example, smart phone platforms, a supplicant may provide a network authentication interface to the SSO subsystem which may carry out the SSO authentication function. A supplicant, for example, may enable applications and/or browsers to facilitate automated and/or seamless authentication while interoperating with the network and/or the access layer authentication module (*e.g.,* GBA module, UICC). By downloading the supplicant pieces from the RP and/or the OP, for example, the supplicant may provide device specific software seamlessly during the OpenID authentication protocol.

Embodiments described herein may work with federated authentication protocols, such as OpenID, and may also work with a LAE, for example. For example, OpenID may be bound to network-assisted authentication. Embodiments described herein may be used to determine how browser and/or non-browser applications communicate with the access layer (*e.g.,* UICC/non-UICC) network-assisted authentication mechanism. For example, a supplicant and an SSO subsystem may provide automation and/or seamless operation with browser and/or non-browser applications and the network-assisted authentication mechanism. A supplicant may present a unified interface to an SSO subsystem and may perform automated and/or seamless authentication on behalf of the user for various authentication protocols *(e.g.,* GBA, AKA, EAP-SIM). A downloadable application or component, such as a signed Java applet for example, may be downloaded (*e.g.,* from an RP and/or OP) and may work with different non-application layer and/or access layer authentication protocols. The component may interface in a uniform manner to an SSO subsystem and to the browser/application.

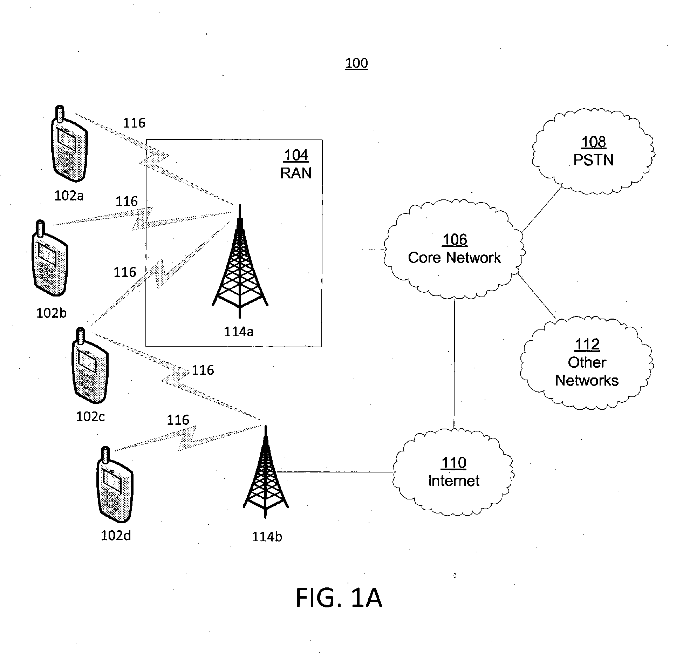

Figure 1A is a diagram of an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), and the like.

As shown in Figure 1A, the communications system 100 may include wireless transmit/receive units (WTRUs) 102a, 102b, 102c, 102d, a radio access network (RAN) 104, a core network 106, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d may be configured to transmit and/or receive wireless signals and may include user equipment (UE), a mobile station, a fixed or mobile subscriber unit, a pager, a cellular telephone, a personal digital assistant (PDA), a smartphone, a laptop, a netbook, a personal computer, a wireless sensor, consumer electronics, and the like.

The communications systems 100 may also include a base station 114a and a base station 114b. Each of the base stations 114a, 114b may be any type of device configured to wirelessly interface with at least one of the WTRUs 102a, 102b, 102c, 102d to facilitate access to one or more communication networks, such as the core network 106, the Internet 110, and/or the networks 112. By way of example, the base stations 114a, 114b may be a base transceiver station (BTS), a Node-B, an eNode B, a Home Node B, a Home eNode B, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104, which may also include other base stations and/or network elements (not shown), such as a base station controller (BSC), a radio network controller (RNC), relay nodes, etc. The base station 114a and/or the base station 114b may be configured to transmit and/or receive wireless signals within a particular geographic region, which may be referred to as a cell (not shown). The cell may further be divided into cell sectors. For example, the cell associated with the base station 114a may be divided into three sectors. Thus, in one embodiment, the base station 114a may include three transceivers, i.e., one for each sector of the cell. In another embodiment, the base station 114a may employ multiple-input multiple output (MIMO) technology and, therefore, may utilize multiple transceivers for each sector of the cell.

The base stations 114a, 114b may communicate with one or more of the WTRUs 102a, 102b, 102c, 102d over an air interface 116, which may be any suitable wireless communication link (e.g., radio frequency (RF), microwave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

In another embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A).

In other embodiments, the base station 114a and the WTRUs 102a, 102b, 102c may implement radio technologies such as IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in Figure 1A may be a wireless router, Home Node B, Home eNode B, or access point, for example, and may utilize any suitable RAT for facilitating wireless connectivity in a localized area, such as a place of business, a home, a vehicle, a campus, and the like. In one embodiment, the base station 114b and the WTRUs 102c, 102d may implement a radio technology such as IEEE 802.11 to establish a wireless local area network (WLAN). In another embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, etc.) to establish a picocell or femtocell. As shown in Figure 1A, the base station 114b may have a direct connection to the Internet 110. Thus, the base station 114b may not be required to access the Internet 110 via the core network 106.

The RAN 104 may be in communication with the core network 106, which may be any type of network configured to provide voice, data, applications, and/or voice over internet protocol (VoIP) services to one or more of the WTRUs 102a, 102b, 102c, 102d. For example, the core network 106 may provide call control, billing services, mobile location-based services, pre-paid calling, Internet connectivity, video distribution, etc., and/or perform high-level security functions, such as user authentication. Although not shown in Figure 1A, it will be appreciated that the RAN 104 and/or the core network 106 may be in direct or indirect communication with other RANs that employ the same RAT as the RAN 104 or a different RAT. For example, in addition to being connected to the RAN 104, which may be utilizing an E-UTRA radio technology, the core network 106 may also be in communication with another RAN (not shown) employing a GSM radio technology.

The core network 106 may also serve as a gateway for the WTRUs 102a, 102b, 102c, 102d to access the PSTN 108, the Internet 110, and/or other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and the internet protocol (IP) in the TCP/IP internet protocol suite. The networks 112 may include wired or wireless communications networks owned and/or operated by other service providers. For example, the networks 112 may include another core network connected to one or more RANs, which may employ the same RAT as the RAN 104 or a different RAT.

Some or all of the WTRUs 102a, 102b, 102c, 102d in the communications system 100 may include multi-mode capabilities, i.e., the WTRUs 102a, 102b, 102c, 102d may include multiple transceivers for communicating with different wireless networks over different wireless links. For example, the WTRU 102c shown in Figure 1A may be configured to communicate with the base station 114a, which may employ a cellular-based radio technology, and with the base station 114b, which may employ an IEEE 802 radio technology.

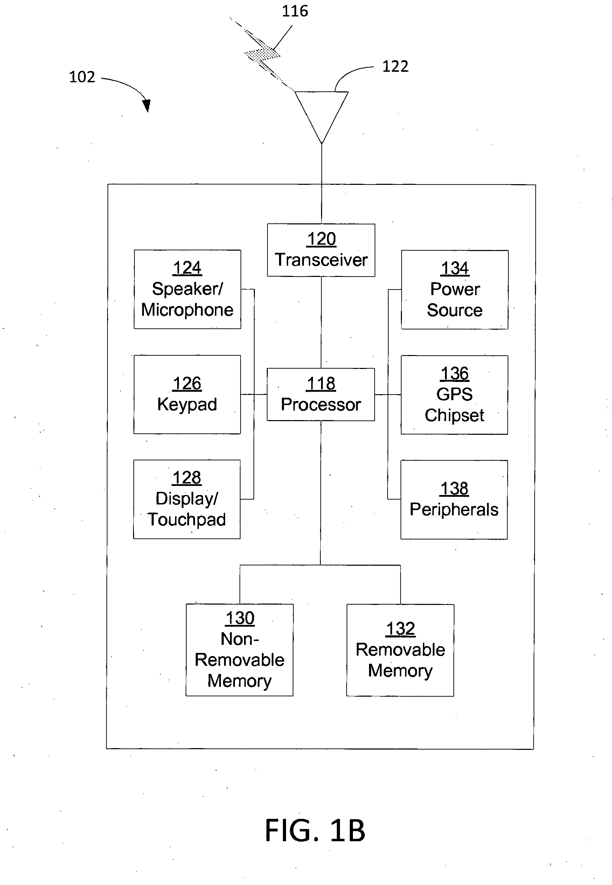

Figure 1B is a system diagram of an example WTRU 102. As shown in Figure 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and other peripherals 138. It will be appreciated that the WTRU 102 may include any subcombination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While Figure 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In another embodiment, the transmit/receive element 122 may be an emitter/detector configured to transmit and/or receive IR, UV, or visible light signals, for example. In yet another embodiment, the transmit/receive element 122 may be configured to transmit and receive both RF and light signals. It will be appreciated that the transmit/receive element 122 may be configured to transmit and/or receive any combination of wireless signals.

In addition, although the transmit/receive element 122 is depicted in Figure 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as UTRA and IEEE 802.11, for example.

The processor 118 of the WTRU 102 may be coupled to, and may receive user input data from, the speaker/microphone 124, the keypad 126, and/or the display/touchpad 128 *(e.g.,* a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries *(e.g.,* nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (*e.g.,* longitude and latitude) regarding the current location of the WTRU 102. In addition to, or in lieu of, the information from the GPS chipset 136, the WTRU 102 may receive location information over the air interface 116 from a base station *(e.g.,* base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs or video), a universal serial bus (USB) port, a vibration device, a television transceiver, a hands free headset, a Bluetooth® module, a frequency modulated (FM) radio unit, a digital music player, a media player, a video game player module, an Internet browser, and the like.

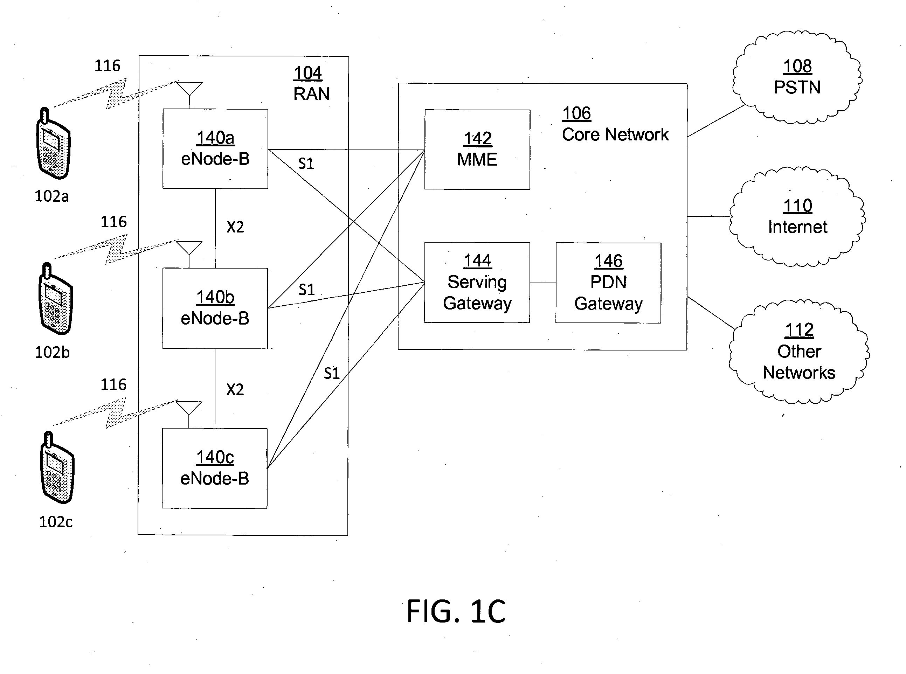

Figure 1C is a system diagram of the RAN 104 and the core network 106 according to an embodiment. As noted above, the RAN 104 may employ an E-UTRA radio technology to communicate with the WTRUs 102a, 102b, 102c over the air interface 116. The RAN 104 may also be in communication with the core network 106.

The RAN 104 may include eNode-Bs 140a, 140b, 140c, though it will be appreciated that the RAN 104 may include any number of eNode-Bs while remaining consistent with an embodiment. The eNode-Bs 140a, 140b, 140c may each include one or more transceivers for communicating with the WTRUs 102a, 102b, 102c over the air interface 116. In one embodiment, the eNode-Bs 140a, 140b, 140c may implement MIMO technology. Thus, the eNode-B 140a, for example, may use multiple antennas to transmit wireless signals to, and receive wireless signals from, the WTRU 102a.

Each of the eNode-Bs 140a, 140b, 140c may be associated with a particular cell (not shown) and may be configured to handle radio resource management decisions, handover decisions, scheduling of users in the uplink and/or downlink, and the like. As shown in Figure 1C, the eNode-Bs 140a, 140b, 140c may communicate with one another over an X2 interface.

The core network 106 shown in Figure 1C may include a mobility management gateway (MME) 142, a serving gateway 144, and a packet data network (PDN) gateway 146. While each of the foregoing elements are depicted as part of the core network 106, it will be appreciated that any one of these elements may be owned and/or operated by an entity other than the core network operator.

The MME 142 may be connected to each of the eNode-Bs 142a, 142b, 142c in the RAN 104 via an S1 interface and may serve as a control node. For example, the MME 142 may be responsible for authenticating users of the WTRUs 102a, 102b, 102c, bearer activation/deactivation, selecting a particular serving gateway during an initial attach of the WTRUs 102a, 102b, 102c, and the like. The MME 142 may also provide a control plane function for switching between the RAN 104 and other RANs (not shown) that employ other radio technologies, such as GSM or WCDMA.

The serving gateway 144 may be connected to each of the eNode Bs 140a, 140b, 140c in the RAN 104 via the S1 interface. The serving gateway 144 may generally route and forward user data packets to/from the WTRUs 102a, 102b, 102c. The serving gateway 144 may also perform other functions, such as anchoring user planes during inter-eNode B handovers, triggering paging when downlink data is available for the WTRUs 102a, 102b, 102c, managing and storing contexts of the WTRUs 102a, 102b, 102c, and the like.

The serving gateway 144 may also be connected to the PDN gateway 146, which may provide the WTRUs 102a, 102b, 102c with access to packet-switched networks, such as the Internet 110, to facilitate communications between the WTRUs 102a, 102b, 102c and IP-enabled devices.

The core network 106 may facilitate communications with other networks. For example, the core network 106 may provide the WTRUs 102a, 102b, 102c with access to circuit-switched networks, such as the PSTN 108, to facilitate communications between the WTRUs 102a, 102b, 102c and traditional land-line communications devices. For example, the core network 106 may include, or may communicate with, an IP gateway (e.g., an IP multimedia subsystem (IMS) server) that serves as an interface between the core network 106 and the PSTN 108. In addition, the core network 106 may provide the WTRUs 102a, 102b, 102c with access to the networks 112, which may include other wired or wireless networks that are owned and/or operated by other service providers.

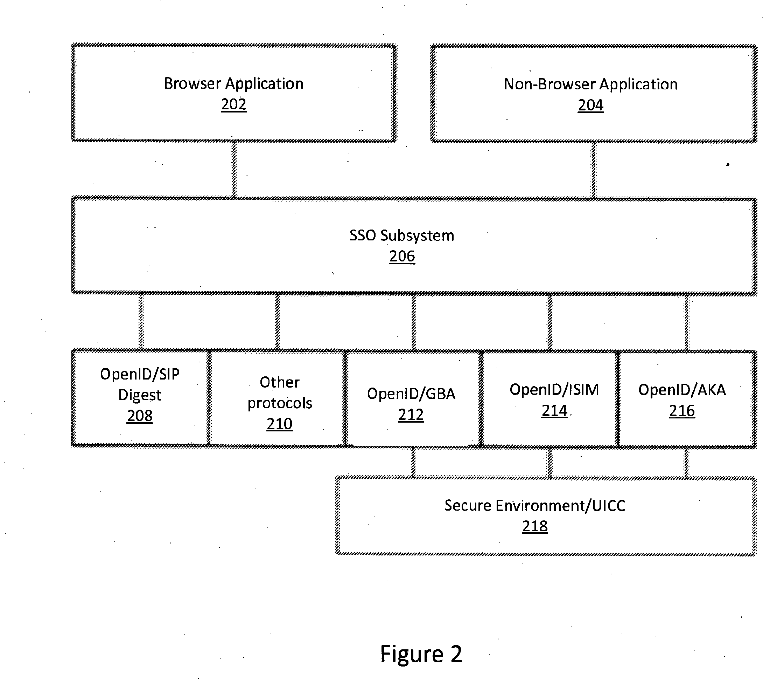

Figure 2 illustrates one embodiment of an architectural framework for the use of multiple SSO protocols and/or modules. As illustrated in Figure 2, an SSO subsystem 206 may be in communication with an application configured to access services from a service provider, such as browser application 202 and/or non-browser application 204. The applications (browser application 202 and non-browser application 204) may be applications with which the user may interact. Using the browser application 202 and/or non-browser application 204, a user may have access to a variety of services (*e.g.,* websites, banking services, ticket dispensing services for entertainment events, and/or other services provided by a service provider).

The SSO subsystem 206 may serve as the hub for the SSO process. In an example embodiment, the SSO subsystem 206 may be operator controlled. The SSO subsystem 206 may serve as a network proxy by performing user authentication (*e.g.,* user-assisted and/or network-assisted). Additionally, the SSO subsystem 206 may perform the follow-on creation and/or submittal of signed, or otherwise trustworthy, user identity assertions and/or authentication assertions to service providers and/or identity providers for network-assisted authentication. Some of the functions of the SSO subsystem 206, such as secure storage and processing, may be carried out within the secure trusted environment 218.

The architecture illustrated in Figure 2 may integrate the user-assisted authentication experience with an array of individual self-contained network-assisted authentication technologies *(e.g.,* also referred to as SSO technologies or SSO protocols or SSO proxies), some of which may use network-assisted authentication to perform a bootstrapping mechanism for authentication and key exchange. For example, the SSO subsystem 206 may be in communication with multiple authentication modules 208, 210, 212, 214, and/or 216, each capable of performing a network-assisted authentication with a service provider using a different network-assisted authentication protocol. These network-assisted authentication modules 208, 210, 212, 214, and/or 216 may be used to provide secure user access to a desired service, based on pre-installed credentials such as digital certificates, shared master secrets, or any other method of enrollment with the different supported authentication schemes. According to an example embodiment, the authentication modules may include an OpenID/SIP digest module 208, another OpenID module 210, an OpenID/GBA module 212, an OpenID/ISIM module 214, and/or an OpenID/AKA module 216. While the network-assisted authentication modules illustrated in Figure 2 each implement an OpenID network-assisted authentication protocol, other types of network-assisted authentication protocols may also, or alternatively, be implemented.

One or more of the network-assisted authentication modules may be supported by a given service provider and/or identity provider. Each network-assisted authentication module may be configured to perform a network-assisted authentication by implementing its corresponding authentication protocol, such as by using an authentication algorithm for example. The OpenID/GBA module 212, OpenID/ISIM module 214, and/or OpenID/AKA module 216 may be in communication with a secure trusted environment 218. The secure trusted environment 218 may include a UICC, a smart card, or other secure trusted environment for example. In an example embodiment, the secure trusted environment 218 may be a hardware-based entity on a UE, and may be responsible for securely storing sensitive data *(e.g.,* cryptographic keys, subscriber credentials) and executing secure processing of sensitive functions (*e.g.,* cryptographic calculations).

One or more of the components illustrated in Figure 2 may reside in a mobile communications device. While Figure 2 illustrates functional modules within the described architecture, Figure 2 is not meant to require the residence of any non-application function as being either on or off the secure trusted environment 218. The components and their interactions are described in greater detail herein. Although authentication may be described with reference to the OpenID protocol, the same concepts may be applied to other authentication protocols, such as Liberty Alliance for example.

The user may use an application (*e*.*g*., browser application 202 and/or non-browser application 204) to make an initial visit to a service provider (*e.g.,* relying party (RP)), such as a network application service provider for example. The service provider *(e.g.,* RP) may receive a user identification which, for example, could be an OpenID user identifier. In the case of OpenID the user may be redirected (*e.g.,* the discovery mechanism may use the OpenID Provider (OP) identity to determine the internet address of the OP), following an RP initiated discovery, to the network based Identity Management entity, which may be the OP for example. In an example embodiment, the OP identity may be used to provide the internet address of the OP to the RP. The authentication process may then begin.

The SSO subsystem 206 may provide a user authentication interface for enabling communications with the applications with which the user interacts on the application side and a network authentication interface for the network-assisted authentication modules 208, 210, 212, 214, and/or 216. Thus different applications *(e.g.,* browser application 202 and/or non-browser application 204) may provide inputs to the SSO subsystem 206 based on user inputs or the SSO subsystem 206 may present an authentication screen to the user to enable network-assisted authentication of the user with a service provider and/or local user-assisted authentication with the UE. The different network-assisted authentication modules 208, 210, 212, 214, and/or 216 *(e.g.,* SSO protocols) may be designed to interact with the SSO subsystem 206. Policy management may also be performed by the SSO subsystem 206.

The SSO subsystem 206 authentication structure may possess two types of user authentication, user-assisted authentication and network-assisted authentication. Both of these types may be separated so that one could occur independently of the other but the two may be bound to each other *(e.g.,* via assertions that may be produced by the SSO subsystem) and interact with each other *(e.g.,* a user-assisted authentication may trigger a network-assisted authentication or visa-versa). The user-assisted authentication of the user and the provisioning of credentials from the user to the SSO subsystem 206 (for the user-assisted authentication) may occur independently and may be decoupled from the network-assisted authentication protocol. The user may be shielded from the network-assisted authentication protocol. This transparency, along with the fact that a single set of user credentials may be independent of the service provider, may result in a seamless SSO experience for the user. Moreover, the two authentication types may provide for a binding of the user claimed identity through its credential, be it biometric, a password, a PIN, a token, another user credential, or a combination thereof, with the subscriber credentials held in the UICC or device identity, such as IMSI or IMPI. Such binding, along with the architectural decoupling of both types of authentication, may be achieved by the SSO subsystem 206 serving as an intermediary layer. The SSO subsystem may perform a cryptographic binding, either by itself or by a call to one of the lower-layer authentication protocols as described herein.

The SSO subsystem 206 may function as a proxy for the network-assisted authentication functions of an external stakeholder, such as an MNO for example, and may provide information concerning provisioned policy functions to the external stakeholder. When a user initiates access to a service *(e.g.,* through keying a URL on a web browser or starting an application), a user-assisted authentication process may be initiated. For example, the user may be requested to input a user credential, such as a biometric credential, and/or a password such as a PIN, for example. In an example embodiment, a mobile communications device may possess PIN features for access to the device itself which may also be part of the user credential information. For example, the user interface of the UE may convey user-assisted authentication credential information, the service being accessed *(e.g.,* in the form of the web URL or the application activated), and/or other information related to the service to be used, to the SSO subsystem 206 through a specific interface. Such a conveyance may activate functions within the SSO subsystem 206 to authenticate the user, based on the provided information and provisioned policies. For example, parameters from the user-assisted authentication may be supplied to the network-assisted authentication protocol. Such parameters may include, for example, the confidence level of the user-assisted authentication, the result *(e.g.* pass or fail) of the user-assisted authentication, and the time of the user-assigned authentication. The SSO subsystem 206 may run a policy function which may comprise various authentication related parameters such as, for example, the confidence (assurance) level of authentication considered to be adequate for the service being accessed and the minimum freshness (*e.g.,* time completed) of the authentication. For example, the user may wish to use a banking service for the purpose of paying a bill. In this scenario, the provisioned policy may require a strong form of user-assisted authentication *(e.g.,* multi-factor) and the provisioned policy may require that the authentication be carried out just prior to navigating the user to the service. If a low level of security is desired for a service (*e.g.,* email access) the policies may relax the user-assisted authentication requirements. For example, a PIN may be used for user-assisted authentication with a low level of security. In an example embodiment, the policies that drive the user authentication may be performed by the external stakeholder and/or the service provider. For example, a policy function may be performed at the service provider *(e.g.,* on the network), at the UE (*e.g*., locally), or a combination thereof (*e*.*g*., distributed functions).

In an example embodiment, the policies to be followed by the SSO subsystem 206 may determine what SSO authentication protocol *(e.g.,* network-assisted authentication module 208, 210, 212, 214, and/or 216) is to be selected for a network-assisted authentication. The criteria for network-assisted authentication module *(e.g.,* SSO authentication protocol) selection may be based on available resources and/or the security requirements of the service to be accessed. The internal policy mechanisms may include an external stakeholder (*e.g.,* MNO) provided prioritized list of preferred authentication modules (*e.g.,* SSO protocols). Once the policy decision is made, the SSO subsystem 206 may provide a mechanism for communicating to the external stakeholder (*e.g.,* MNO) which specific network-assisted authentication module has been selected for the protocol exchanges. Alternatively, the SSO subsystem may negotiate capabilities and agree on an authentication module to be used.

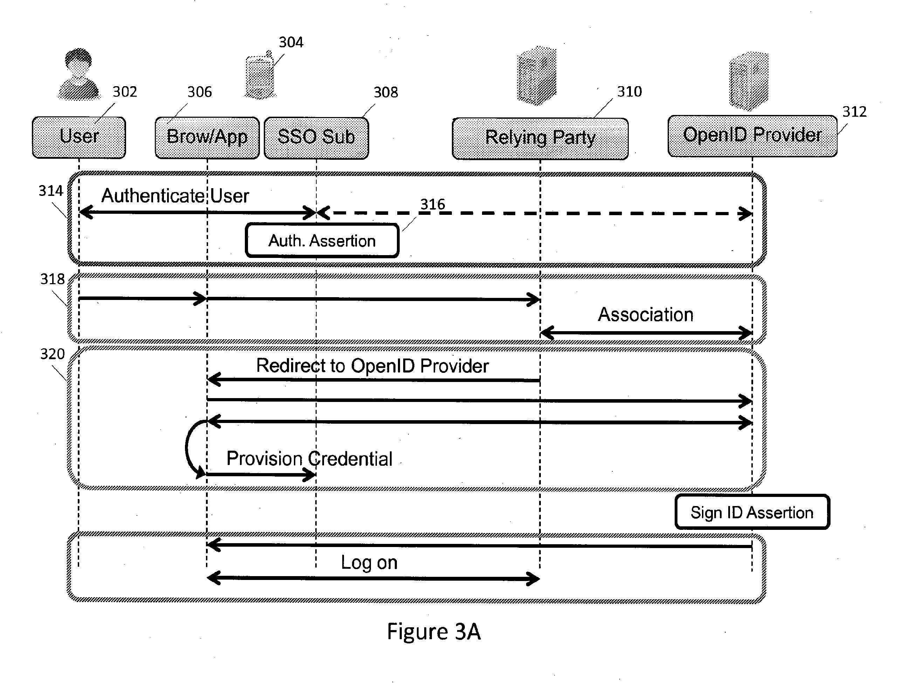

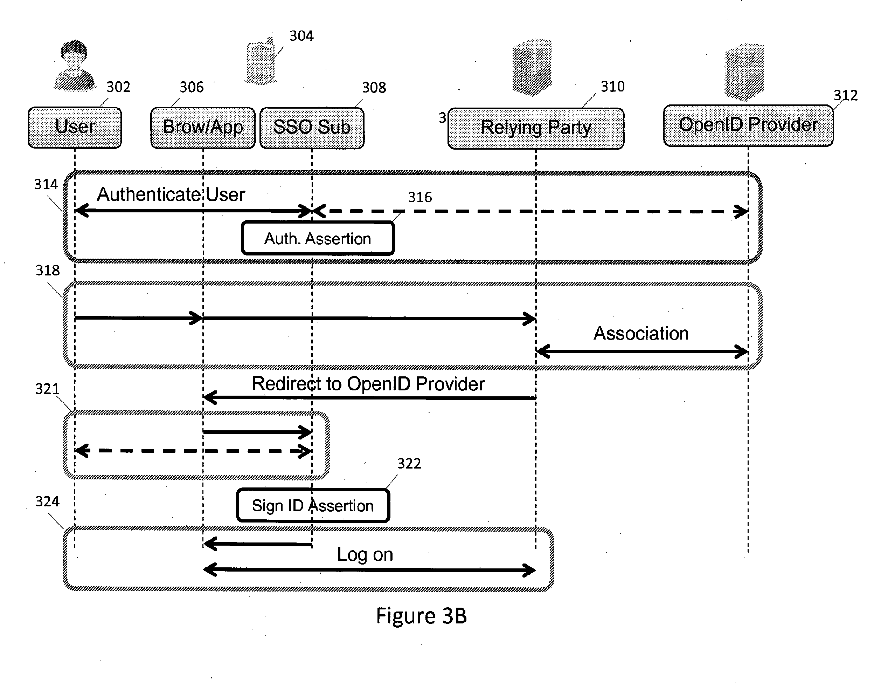

Figures 3A and 3B illustrate example embodiments of a protocol implemented using an SSO framework architecture. In the context of OpenID, the SSO subsystem may perform certain functions in a secure manner, some of which are described herein with reference to the call flow in Figures 3A and 3B.

As illustrated in Figures 3A and 3B, at 314, a user-assisted authentication may be performed. For example, user credentials may be authenticated and/or processed. The user credentials may include unique authentication parameters associated with the user 302, such as a user PIN, a password, a user identifier, biometric information, or digest, and/or other forms of user-assisted authentication parameters. The user 302 may be authenticated locally, at the device 304, or in combination with a remote entity, such as an external stakeholder *(e.g.,* MNO) or an Identity provider (IdP) *(e.g.,* OpenID Provider 312).

The SSO subsystem 308 may be the local entity on the user device 304 configured to perform authentication of the user 302. The SSO subsystem 308 may perform authentication with or without a LAE according to various embodiments. For example, Figure 3A illustrates an example provisioning protocol flow that may enable the SSO subystem to perform authentication locally, as described herein. Once the user-assisted authentication is complete, the SSO subsystem 308 may generate an authentication result, such as an authentication assertion for example, at 316. An authentication assertion may comprise data such as, for example, a time that the user-assisted authentication was completed and a confidence level of authentication. The level of confidence may refer to a level of assurance to which a remote party may place in the authentication of a user or UE. The user-assisted authentication result *(e.g.,* pass or fail) may be stored securely and locally at the device 304 and/or used with the network-assisted authentication protocol. Other parameters associated with the user-assisted authentication may also be stored and/or used in the network-assisted authentication. For example, these parameters may include a time of authentication, strength of authentication, and/or type of authentication parameter(s). These parameters may be stored with the authentication result or used in the network-assisted authentication. For example, the SSO subsystem may use the information to relay authentication data to a service provider, and the service provide may determine whether the authentication data is sufficient to provide a user access to a service. The user-assisted authentication at 314 may occur at any time and as frequently or infrequently as suggested based upon various authentication policies, such as desired security strength for example. In an example embodiment, if a valid user-assisted authentication result is stored, the SSO subsystem may determine that the user-level authentication need not be performed. Such a scenario may allow the user to access multiple service providers (*e.g.,* RPs) without further user involvement in the authentication process. If a policy requires fresh authentication for access to a specific service at a specific service provider, for example, such re-use of existing authentication information may not be allowed.

At 318, a shared secret key may be established between the RP 310 and the OP 312. For example, the user's OP log-on request, which may include a user-supplied identifier, may be passed to the RP 310 from the application 306 (*e.g.,* browser or non-browser application), which may trigger an association and/or establishment of the shared secret key. According to one example embodiment, the log-on request may be passed to the RP 310 when the user initially attempts to access a network-based service. Based on the received log-on request, an association may be performed that may establish a shared secret key between the OP 312 and the RP 310. In an example embodiment, at 320, a key *(e.g.,* a key derived from the OP 312 and RP 310 shared key and/or a key derived during network-assisted authentication) and/or other credentials may provisioned to the SSO subsystem 308. The provisioned credentials may be used in further authentication with services as described herein.

For example, network-assisted authentication may be performed after provisioning, as illustrated in Figure 3B. For example, the network-assisted authentication may follow a redirection to the OP 312 by the RP 310. The redirect may be received by the application 306 (*e.g.,* browser application or non-browser application), which may redirect the message to the SSO subsystem 308, at 321, for selection of the network-assisted authentication module and/or protocol. The network-assisted authentication module/protocol (*e.g.,* SSO protocol) may be selected and used by the SSO subsystem 308 via policy implementation. This process may include bootstrapping and shared key establishment as further described herein.

As shown in Figure 2, several network-assisted authentication protocol methodologies may be implied by the suite of network-assisted authentication modules *(e.g.,* SSO protocols). Referring again to Figure 3B, according to an example embodiment, OpenID/SIP Digest and/or OpenID/GBA may be viewed as possessing the GBA structure and employ the mechanisms specified in 3rd Generation Partnership Project (3GPP) Technical Specification (TS) number 33.220 (release 10). In OpenID GBA, UICC subscriber credentials may be used to bootstrap a master session key *(e.g.,* denoted Ks) to be shared with the network. The network-assisted authentication may result in an application specific key, Ks_NAF, derived from Ks and shared between the OP 312 and user device 304. The application specific key may be used as a password by the user device 304 when authenticating with the OP 312. For example, it may be used as a password by the user device 304, as described in 3GPP Technical Report (TR) number 33.924 (release 9) for example.

For OpenID/SIP Digest a similar key structure may result through a similar GBA process. This approach to network-assisted authentication may be non-UICC based and SIP Digest credentials may be used, rather than UICC credentials for example. One example embodiment of OpenID/SIP Digest is described in 3GPP TR 33.914 (release 11).

For OpenID/AKA, the network-assisted authentication may be non-GBA based and the user device 304 and OP 312 may employ the 3GPP AKA directly to authenticate and share a key. One example embodiment of OpenID/AKA is described in Alcatel-Lucent pCR S3-100757 in 3GPP SA3.

For conventional OpenID, the SSO subsystem 308 may supply the received user credentials in the network-assisted authentication protocol.

Although OpenID/GBA, OpenID/SIP Digest, and OpenID/AKA may have structural dissimilarities, the application of authentication vectors (AVs), of one type or another, received from the network Home Subscription Server (HSS), may be central to the respective protocols. Additionally, depending upon the policies and the desired security strength, re-authentication of the user (user-assisted authentication) may be carried out when the network-assisted authentication is performed. In an example embodiment, during such a network-assisted authentication it may be assumed that the device has established a network connection, and the network-assisted authentication may be used to authenticate the UE with a service provider.

After successful network-assisted authentication, the SSO subsystem 308 may provide an indication to the application 306 that the network-assisted authentication was successful. For example, the SSO subsystem (*e.g.,* via a LAE) may sign an authentication assertion (*e*.*g*., an identity assertion) at 322 and send an assertion message at 324 to the RP 310. The signed assertion message from the SSO subsystem 308 to the RP 310 may indicate successful authentication and may be signed autonomously by the SSO subsystem 308 with the previously provisioned credential (*e.g.,* shown at 320 in Figure 3A). This notification of successful network-assisted authentication may be performed before the user 302 gains access to the desired service at the RP 310. Early in the authentication process *(e.g.,* SSO process) an association may have been performed establishing a shared secret key between the OP 312 and the RP 310. In one example embodiment, the assertion message may be signed with this shared secret key and/or a derivation of the key. Once the RP 310 and/or the user device 304 *(e.g.,* via application 306) have received an indication that the network-assisted authentication was successful, the user device 304 *(e.g.,* via application 306) may access the services at the RP 310 to which it is logged on.

The assertion message provided to the RP 310 may indicate that both authentication to the network and to the service may be complete and that the user claimed identity implemented in the user-assisted authentication may be bound to the subscriber credentials, such as the IMSI or IMPI for example, implemented in the network-assisted authentication. For example, it may be part of the selected SSO functionality that the binding be performed via a mechanism that sees the connection between user-supplied credentials and UICC-based (or SIP Digest) credentials. The assertion message may comprise information indicative of binding as part of the overall SSO protocol. Also, in an example embodiment, the assertion message may provide an authentication strength or confidence level *(e.g.,* low, medium, high, very high). For example, a low authentication strength in the assertion message may indicate that the OP 312 has little or no confidence in the asserted identity (*e.g.,* automatic insertion of username/password with minimal rules for format of password); a medium authentication strength may indicate that the OP 312 has some confidence in the asserted identity (*e.g.,* manual use of username/password with rules applied to format of password); a high authentication strength in the assertion message may indicate that the OP 312 has a high level of confidence in the asserted identity (*e.g.,* use of biometric or crypto network-access token and username/password); and a very high authentication strength may indicate that the OP 312 has a very high level of confidence in the asserted identity (*e.g.,* biometric and crypto token). In an example embodiment, "low" and "medium" levels may indicate that only user credentials are used, and a "high" and "very high" level may require network-assisted interactions to take place and may require a stronger form of authentication such as a biometric and password.

Referring again to Figure 2, Figure 2 illustrates exemplary SSO technologies (protocols) that may be available for network controlled bootstrapping and key establishment. For example, the OpenID/ISIM 214 and OpenID/AKA 216 may be UICC-based and may make use of credentials, such as shared secrets with the network, which may reside securely on the UICC. OpenID/GBA 212 may or may not be UICC based, for example, depending on credentials shared with the network. In an example embodiment, OpenID/SIP Digest 208 may not be UICC based. For example, a conventional user supplied OpenID identity and password may be accommodated. The network authentication interface of the SSO subsystem may allow various SSO protocols (*e.g.,* modules 208, 210, 212, 214, 216 in Figure 2) to be accommodated within a single architectural framework.

According to an example embodiment, a user may be verified with two authentication type binding. Although the user verification may be described with reference to the OpenID protocol, the same concepts may be applied to other authentication protocols, such as Liberty Alliance for example. Upon powering a UE, for example, a user-assisted authentication may occur. For example, a user may provide a user-assisted authentication credential *(e.g.,* a PIN, biometrics) to gain access to the device functions. For example, a user may provide a PIN to gain access to an iPhone. Such authentication mechanisms may be provided one-time at power up or intermittently throughout a session. The frequency requirements for authenticating a user may be policy driven. The SSO subsystem may verify the user provided PIN and may save the result, which may be in the form of an assertion, confirming that the PIN has been entered and verified. Such an assertion may establish user-assisted authentication. After user-assisted authentication is established, the user may attempt a login of a service provider *(e.g.,* RP) which, for example, may support an OpenID protocol by directing a web browser to the RP web page. The SSO subsystem may check the status of user-assisted authentication, and if the status is valid, may supply the user identity to the RP. The RP may perform a discovery of the OpenID provider (OP) and the two entities may establish an association. Such an association may result in a shared key. The device may be redirected to the LAE, which may be an on-UE local OpenID proxy function that may be carried out by the SSO subsystem. In an example embodiment, the policy *(e.g.,* of an external stakeholder) carried out by the SSO may require that a strong network-assisted authentication *(e.g.,* GBA, SIP, AKA) be performed. An authentication module (*e.g.,* an SSO protocol) may be selected. Such a selection may be reported to the MNO, for example, by the SSO subsystem in the authentication protocol. The authentication of the UE may be performed using the selected network-assisted authentication module *(e.g.,* SSO protocol). In an example embodiment, the selected authentication protocol may result in a bootstrap of a shared application specific key between a network-assisted authentication function and the UE. Such a key may be used to authenticate the UE.

The UE may receive an indication of authentication completion and the LAE may sign an assertion message to the RP, indicating that a strong authentication has taken place. The assertion may indicate a binding between the user-assisted authentication *(e.g.,* via the initial user PIN entry) and the subsequent network-assisted authentication (*e.g.,* via the selected SSO authentication protocol). The assertion may indicate one of the authentication confidence levels defined herein. The assertion message may be signed using the key established through association between the local SSO Proxy *(e.g.,* LAE) and the RP. The RP and the LAE may not communicate directly, and so an OP service function (OPSF) may be created on the network to facilitate communication between the two entities. In an example embodiment, the OPSF may be reachable via the public internet by the RP which may communicate with this function as though it is the OP. The local SSO (LAE) proxy may obtain the association key through the OPSF key distribution mechanism. The OPSF may also support signature verification for the RP with respect to the signed assertion originating from the LAE. The user may then be directed to the RP web page seamlessly. In an example embodiment, when the user later wishes to access a different service provider, the SSO subsystem may check if a user-assisted authentication result is already stored and if that authentication is still valid *(e.g.,* according to locally stored policy). If there is a valid stored result, for example, the SSO subsystem may not perform user-assisted authentication at this time. The new service provider may then perform a discovery of the identity provider as described herein. Thus, the user may access the new service provider without entering credentials at the UE and the user may not be involved with the network-assisted authentication. Such a scenario may constitute a full SSO implementation according to an embodiment.

In an example embodiment, users may access preferred (*e.g.,* affiliated) services through registration of preferred services and/or applications. For example, a web or other online applications service provider (*e.g.,* a relying party) may register to an operator's network-based SSO System using an IdP of the service provider's choice. For example, a payment transaction provider may use OpenID to obtain delegated authentication from a particular IdP, which may result in the payment transaction provider becoming an affiliated service. The registration may be initiated by the service provider (*e.g.,* RP), the chosen IdP, the operator's SSO system, or the end user of the service. Further, the registration may be initiated by a user accessing a web-page or the UE-resident SSO subsystem. For example, an SSO subsystem residing on the UE may become 'synchronized' to the database of the network-based SSO subsystem, and thereby may become aware of the list and type of the registered, affiliated services and applications.

The RP may be allowed to select the IdP while not explicitly selecting the SSO protocol. According to an example embodiment, there may be an implicit association between the selection of the IdP and the SSO protocol to be used. For example, the RP may choose a specific IdP because the IdP may support a specific SSO protocol, such as OpenID.

The user may then access a SSO *(e.g.,* OpenID) supported Web-based application service by using the UE. The UE-resident SSO subsystem may comply with an operator provisioned policy and may select a registered affiliated service/application and/or a preferred service/application. The UE-resident SSO subsystem may also intercept (intervene), for example, after the user indicates (*e.g.,* via typing in a URL) his or her preferred service, and may convert or replace the user-typed URL with the URL of an alternative service corresponding to the registered, affiliated version of the same service. Such a replacement service may be provided by the same provider but may be presented and accessed by a preferential, affiliated basis. For example, access may be limited to users of UEs serviced by an operator who has the aforementioned registration-based affiliation to the aforementioned services/applications *(e.g.,* and IdPs and RPs who may provide such services/applications).

According to an example embodiment, subsequent to selection of the service/application, the UE may select a preferred access network-assisted authentication mechanism and the appropriate credentials, on behalf of the user, in a transparent and/or seamless manner. For example, the UE may indicate the selected access network-assisted authentication mechanism within the SSO authentication protocol. The network may recognize the selected preferred access network-assisted authentication mechanism and may authenticate the user. Upon successful authentication, the rest of the SSO operation *(e.g.,* UE redirection to the RP to obtain service) may take place.

As described herein, by connecting to the operator's trust infrastructure by way of the operator's SSO System, the subscribed, affiliated service may effectively acquire network-assisted authentication strength afforded by the operator.

More generally, the SSO architecture described herein may be viewed as incorporating a more formalized functional hierarchy. For example, the SSO subsystem may manage one or more SSO clients *(e.g.,* or local SSO proxies). If the underlying device technology supports a multi-service provider configuration, then a multitude of SSO clients may run as sub-functions to a multi-service manager within the SSO subsystem. This generalized architecture may provide for the separation used to support multiple services with potentially independent policies.

Each SSO client within such a framework may manage several subordinate sub-functions. For example, the local assertion sub-function may be performed by a Local Assertion Entity (LAE). LAE may refer to a formal designation of the sub-function which performs local assertion. One or more LAEs may be controlled by an SSO client, for example, depending on the implementation. For example, the configuration may involve SSO client-LAE pairs (one-to-one) or one client controlling multiple LAEs. In either configuration the SSO client may be the controlling entity. The SSO authentication protocol may also be referred to as the SSO technology herein. For example, the SSO client may control the processing of the mechanisms carried out by the selected SSO authentication protocol. The SSO client may manage the policy enforcement actions that may determine which authentication method may be used. For example, the policies applied may be under the control of an external stakeholder such as the MNO.

According to another embodiment, UEs may support the implementation of multiple SSO clients running as sub-functions within a multi-service manager. Such an implementation may be viewed as functioning in an environment where different service providers may need a separate, isolated SSO client exclusively serving that particular provider while allowing policy-based management of the multiple available connection technologies and services provided by the same provider concurrently. For example, the ME may have SSO Client A and SSO Client B, and each of these SSO Clients may be controlled separately and in isolation from each other. The SSO aspects may be specific to the provider.

Along with the multiple SSO clients, in an example embodiment there may be a multitude of LAEs. For example, each LAE may be implemented in an access-technology-specific domain on the UE. Because of the SSO client isolation, there may be one LAE per isolated domain. Also, for example, the LAE may be structured according to the available access technologies supported by the device. The same access technology may be multiplexed between the different LAEs or different access technologies may be used by the LAEs concurrently. Thus the UE may support multiple LAEs. Depending on the implementation, for example, the relationship between LAEs and SSO clients may be one-to-one or one SSO client may control or be served by multiple LAEs.

As described herein, the functions performed within the SSO subsystem may be configured in a variety of ways. In the UE, for example, there may be division between UICC and non-UICC (or alternatively secure environment) based architectures. There may also be the demarcation of functions between the UE and the MNO network. The following are some possible configurations according to various embodiments.

Cryptographic AKA functions may reside on a non-UICC smartcard. Such functions may be performed on a fully-programmable, non-UICC smartcard such as G&D's MSC and may be similar to network-assisted authentication (*e.g.,* AKA), but the card may be removable and under user control. Cryptographic functions may reside on a UICC. Such functions may include elementary crypto functions of a LAE implemented on a UICC, such as, for example, key derivation and assertion signing. The functionality may be similar to network-assisted authentication (AKA). Additionally, binding to IMSI and user registration with a MNO may be realized.

According to an example embodiment, LAE functions may reside on a UICC or secure trusted environment. For example, an LAE may be a full implementation of OpenID on a smartcard web server (SCWS) or other web browser application. In an example embodiment, a network-assisted authentication configuration may be to bind LAE *(e.g.,* local assertion) authentication to any form of strong network-assisted authentication *(e.g.,* local OpenID/GBA). Strong authentication may apply to strong local user-assisted authentication as an additional factor by adding biometrics or similar local authentication. For example, any form of strong local authentication may be combined with and bound to network-assisted authentication.

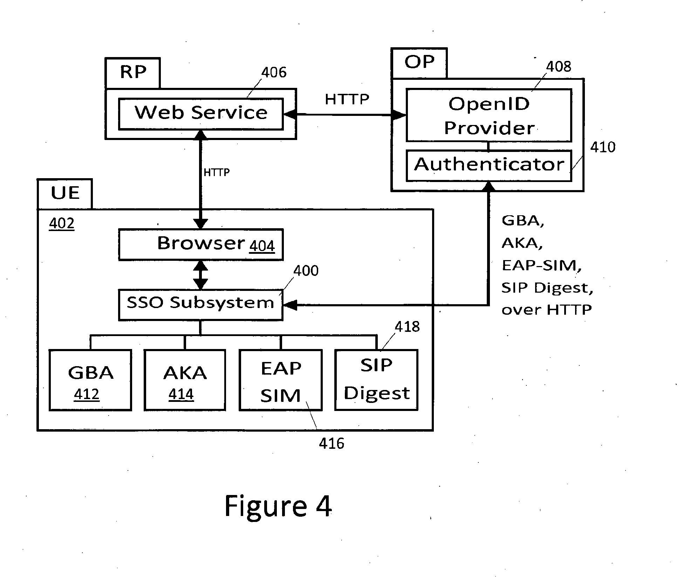

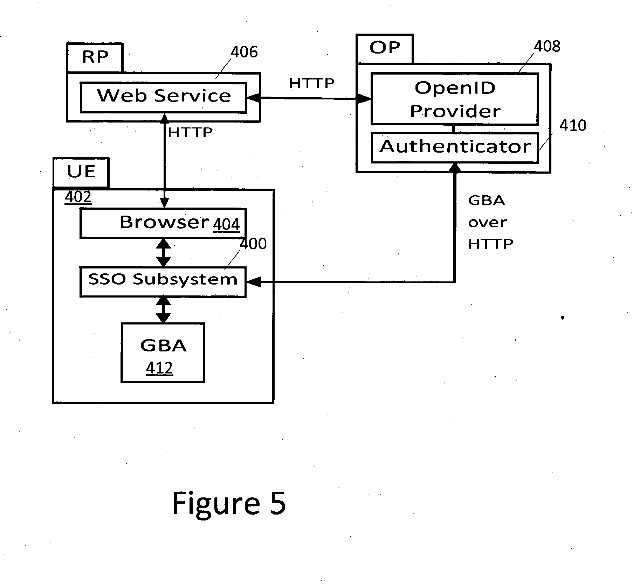

Figure 4 illustrates another example embodiment of an architectural framework for the use of multiple SSO protocols and/or modules. As illustrated in Figure 4, an SSO subsystem 400 of a UE 402 may be in communication with an application *(e.g.,* browser application 404) configured to access services from a service provider, such as a web service 406 *(e.g.,* an RP). The SSO subsystem 400 may provide SSO functionality for a user, and may create automation in the sign-on process to authentication services. For example, automation features may include functions which may provide the user identifier to the web service 406 and/or credentials to the identity provider (*e.g.,* OpenID Provider (OP) 408) without user interaction. Automation may also feature an automatic provisioning of authentication credentials to the authenticator 410 of the OP 408, as well as the automatic selection and negotiation of the authentication module (*e.g.,* authentication method). According to an example embodiment, the authentication modules may include an OpenID/SIP digest module 418, an OpenID/GBA module 412, an EAP/SIM module 416, and/or an OpenID/AKA module 414. For example, Figure 5 shows an example embodiment in which the GBA module 412 is selected by the SSO subsystem 400. While the network-assisted authentication modules illustrated in Figure 4 may each implement an OpenID network-assisted authentication protocol, other types of network-assisted authentication protocols may also, or alternatively, be implemented. The automation provided by the SSO subsystem 400 may be executed based on previously defined policy(ies) stored on the wireless device *(e.g.,* UE 402) and provisioned by, for example, the OP 408. Such automation may be provided by cookies (*e.g.,* stored in in the browser 404), a Java applet, a browser cache storing form data, or the like. In an example embodiment, automation may be provided with a scraping function, for example, which may automatically detect forms to be filled.

In an example embodiment using a Java applet, for example, automation features may be incorporated into the Java applet, which may be downloaded during the authentication process. Although the automation features discussed herein may be implemented by a Java applet, the embodiments described herein are not so limited. In some embodiments, persistent features (*e.g.,* the user login state) may not be located in the Java applet since, for example, the applet may be removed from the browser cache. Additionally, as described herein, the Java applet may become available after the download in the protocol run process. Functions that make use of the Java applet may be performed after the applet has been downloaded into a device such as a UE. The Java applet itself may not provide the scraping feature if, for example, the Java applet is downloaded from the OP after being redirected to the OP.

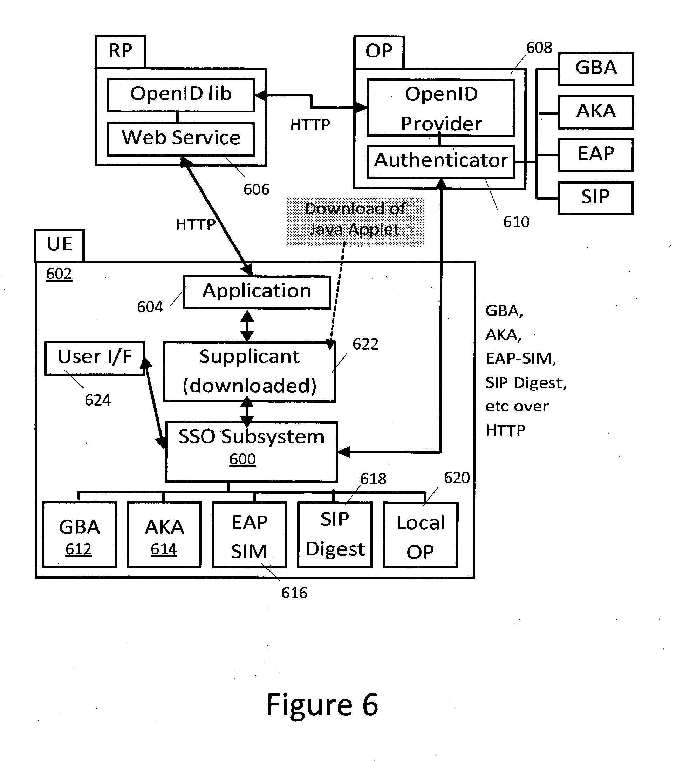

Figure 6 illustrates an example embodiment of an architectural framework that comprises a downloadable component for facilitating the use of multiple SSO technologies and/or modules. An exemplary downloadable component (*e.g.,* the supplicant 622) may provide an interface for a browser application and/or non-browser application (*e.g.,* application 604) to the network-assisted modules such as, for example, authentication modules, protocols, and APIs *(e.g.,* modules 612, 614, 616, 618, and 620). In an example embodiment, the downloadable component (*e.g.,* supplicant 622) is not bound to the existence of the full SSO subsystem 600 on the UE 602. For example, the component (*e*.*g*., supplicant 622) may be independent in that it may be used with or without the full SSO subsystem 600 features on a wireless device *(e.g.,* UE 602). For purposes of describing exemplary features of the supplicant 622, Figure 6 illustrates the supplicant 622 as a separate component from the SSO subsystem, although the supplicant may be contained within the SSO subsystem 600. Additionally, embodiments described herein may include variants of supplicants with or without a subset of an SSO subsystem.

In an example embodiment, the supplicant 622 may be implemented with a Java applet or the like. For example, a Java applet may be downloaded during the authentication process and may create a layer between a browser (or application 604) and the network-assisted authentication modules (*e.g.,* GBA module 612, AKA module 614, EAP SIM module 616, SIP digest module 618, local OP module 620) in the UE 602. Such a layer may be a software layer which, for example, enables the network authentication interface with authentication modules since native browsers may not support some authentication mechanisms.

The supplicant 622 *(e.g.,* a Java applet) may be independent from a browser in the sense that, once downloaded, it may be executed and may issue and/or process HTTP requests. For example, the Java applet may issue a request to the OP 608 to retrieve an authentication challenge. The Java applet may interface with the authentication modules *(e.g.,* GBA module 612, AKA module 614, EAP SIM module 616, SIP digest module 618, LAE module) as well as with the SSO subsystem 600. For example, a UE 602 may provide a layered access where access to authentication modules may be made available through the SSO subsystem 600. The network authentication interface between the SSO subsystem 600 and the authentication modules may be used to facilitate authentication. For example, a Java applet may send the challenge from an identity provider *(e.g.,* OP 608) to a network-assisted authentication module, the authentication module may calculate the digest response, and the Java applet may send the response directly to the OP 608 or via a browser to the OP 608.

As illustrated in Figure 6, the LAE *(e.g.,* local OP 620) may be viewed *(e.g.,* by the SSO subsystem 600) as another authentication module, although the LAE 620 may perform functions in addition to authentication. The role of a Java applet with respect to the LAE may be different than the role of a Java applet with respect to an authentication module since, for example, the LAE may contain more functions than a pure authentication method. For example, the LAE might not calculate the authentication response, and it may actively perform the authentication. As a result, the LAE may create the assertion message which may be directly sent to a service provider, such as the web service 606 *(e.g.,* RP), for verification. With respect to the LAE, the supplicant 622 (*e.g.,* Java applet) may enable communication from an application 604 *(e.g.,* a browser) to the LAE. According to an example embodiment, the SSO subsystem 600 may include and build on a software middleware component such as, for example OpenMobile API, standardized by SIMAlliance. Such a software middleware component may facilitate the communication, for example, from user/OS level applications to SIM card applications.

Still referring to the exemplary architecture shown in Figure 6, a supplicant 622 *(e.g.,* a signed Java applet) may be downloaded via a browser and may be customized for each device *(e.g.,* UE 602) type. Supplicants may be customized for various device types such as, for example, Symbian, iOS, Android, or the like. The supplicant 622 may enable communication from a browser to components of the SSO subsystem 622 such as, for example, a GBA module 612, AKA application 614, and an SIP Digest authenticator 618. The supplicant 622 may be provided by a server of an identity provider *(e.g.,* OP server 608) and/or a web service 606 *(e.g.,* RP). The supplicant 622 may provide the interface functions used to perform automated and/or seamless user authentication. In an example embodiment, the SSO subsystem 600 may allow the application 604 *(e.g.,* a browser) to communicate with the network-assisted authentication modules 612, 614, 616, 618, and 620. The supplicant 622, for example, may allow the application 604 *(e.g.,* a browser) to use features of the SSO subsystem 600. The supplicant 622 may help in the discovery of the LAE 620 and the connection to the LAE, for example, if a LAE is available on the UE 602. The supplicant 622 may redirect the user to a local or remote variant of an identity provider *(e.g.,* LAE or remote OP 608) and back to the web service 606 *(e.g.,* an RP). A supplicant 622 may enable use of the SSO subsystem 600 as an authentication module and may enable use of a LAE part of the SSO subsystem 600 *(e.g.,* local OP 620), for example, to generate the signed assertion directly. The SSO subsystem 600 may be pre-loaded in a mobile device (*e.g.,* UE 602) and/or downloaded to the device via other mechanisms. In an example embodiment, the SSO subsystem 600 may be persistent across services while the supplicant 622 may be reloaded each time the user visits a web service 606 *(e.g.,* an RP).

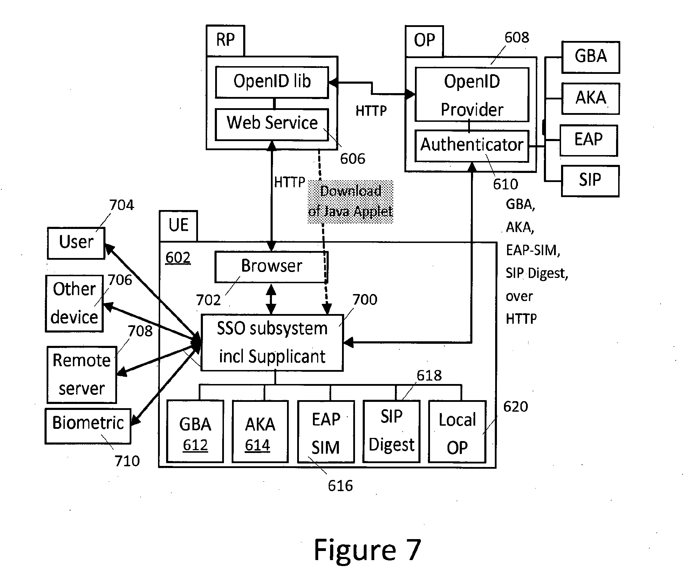

In one embodiment, a supplicant, such as the supplicant 622 in Figure 6, may be implemented as a Java applet or the like, and may run in a restricted operation environment (*e.g.,* a 'Sandbox'). Such a supplicant may have limited access to system resources. In an example embodiment, a supplicant may be unloaded after the authentication has been performed (*e.g.,* when the browser leaves the service website). With reference to Figure 7, since the single-sign-on (SSO) features may span user authentications between different services, the persistent aspects of the SSO function may be provided by the non-supplicant parts of the SSO subsystem 700. Figure 7 illustrates an example embodiment of the architectural framework of Figure 6 with exemplary interface components of the SSO subsystem 700. As shown in Figure 7, an SSO subsystem may include a supplicant, and the SSO subsystem 700 may interface with various components such as, for example, a user 704, a remote server 708, a biometric unit 710, and various other devices 706. Interworking functionality of the supplicant piece of the SSO subsystem 700 is described by way of example below.

Still referring to Figure 7, the supplicant may not have direct access to the authentication functions in general, or may have access to the authentication functions provided by the LAE *(e.g.,* local OP 620). In such a case, some authentication requests using network-assisted authentication methods may be called via the SSO subsystem 700. Such a call may include a proper authorization and/or prior validation (*e.g.,* by checking a code signature) of the supplicant to the SSO subsystem 700. The supplicant may provide various interfaces. For example, the supplicant may provide functionality to enable automation of the authentication process by providing an interface to the SSO subsystem 700 to select an identifier to be used with a particular service provider (*e.g.,* RP). The supplicant may provide an interface to the SSO subsystem 700 to provide credentials for authentication with the identity provider *(e.g.,* OP 608). The supplicant may also provide an interface (*e.g.,* a network authentication interface) to the SSO subsystem 700 for the selection and/or negotiation of the network-assisted authentication module or mechanism. In one example embodiment, the supplicant may provide functions which replace the redirect messages such as, for example, the redirect message from the web service 606 *(e.g.,* RP) to the identity provider *(e.g.,* OP 608) for authentication and the redirect message from the web service 606 to the OP 608 after authentication.

As described above, the SSO subsystem 700 may provide a user authentication interface *(e.g.,* user interface 624 in Figure 6) for user-assisted authentication and may perform user-assisted authentication through this interface. The user authentication interface may be provided by, for example, the OP 608 as part of the OP supplicant function or may be part of the persistent function of the SSO subsystem 700. The SSO subsystem 700 may interface (*e.g.,* communicate) with an identity provider (*e.g.,* OP 608) to collect information on user-assisted authentication policies. Such information on policies may include user-assisted authentication parameters such as, for example, freshness (*e.g.,* time when authentication was carried out) required by the identity provider or service provider and authentication strength level *(e.g.,* biometric or user name/password). The SSO subsystem may also interface with the OP 608 to facilitate selection of the network-assisted authentication module and/or interface. After authenticating a user 704 and/or user equipment (UE) 602 successfully, via a user interface and/or using a selected network-assisted authentication method *(e.g.,* GBA module 612, AKA module 614, EAP SIM 616, SIP Digest 618), the SSO subsystem 700 may set a persistent state of user authentication for a time period *(e.g.,* a validity period). Upon receiving re-authentication requests *(e.g.,* by local trigger or by the network), the SSO subsystem 700 may re-authenticate the user 704. In an example embodiment, such a re-authentication may provide a seamless log-on experience to the user 704.

The SSO subsystem 700 may use interfaces to components external to the UE 602 *(e.g.,* other devices 706), for example, to obtain authentication information from a token connected via a wireless interface to the UE 602. The SSO subsystem 700 may establish a secondary communication channel to a biometric unit 710 or to a remote server 708 for authentication.

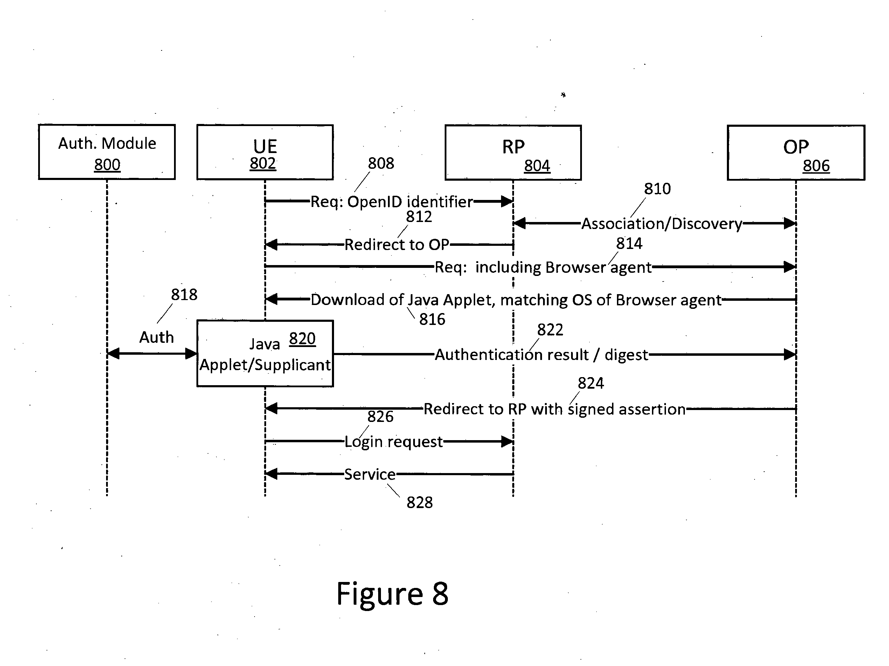

Figure 8 is a flow diagram showing an authentication flow which triggers download of a supplicant (e.g., Java applet). The exemplary flow illustrated in Figure 8 may be implemented within the SSO framework architecture described herein. Although the example embodiments in the Figures are described using OpenID terminology, the exemplary flows may apply to any number of single sign-on security protocols, such as Liberty Alliance, for example.

Referring to Figure 8, at 808, the UE 802 may send a user's OP log-on request to the RP 804. The log-on request may include a user-supplied identifier, and may be passed to the RP 804, which may trigger an association and/or establishment of a shared secret key, at 810, between the RP 804 and the OP 806. Network-assisted authentication may be performed after 810. For example, the network-assisted authentication may follow a redirection to the OP 806 by the RP 804. The redirect may be received by the UE 802 at step 812. At 814, the UE may send a request, to the OP 806, for authentication using a supplicant. The request may comprise an identity of an application such as, for example, an identity of a non-browser application or an identity of a browser agent used by the UE 802. In an example embodiment, a Java applet may be matched according to the type of browser agent in the request. For example, multiple and/or different Java applets may be used for different devices, so that a Java applet may be selected according to various components of the UE 802 such as, for example, the processor, OS, and/or the browser. In response to the request, at 816, the UE 802 may download the supplicant 820 *(e.g.,* a Java applet) from the OP 806.

The Java applet may be signed by the OP 806. Issuer certificates for Java applets may be checked by a browser, for example, using the UE system certificate store. For example, a modified system or browser certificate store implementation may check the Java applet signature with a certificate/key stored on the secure element of the UE 802 *(e.g.,* UICC). The Java applet may comprise the logic to decide which network-assisted authentication module 800 to use with an RP 804. The Java applet may also contain logic to indicate to the OP 806 which authentication modules/mechanisms are available in the UE 802. In an example embodiment, the Java applet may be specific to one single authentication module 800 and the OP 806 may select which Java applet to provide to the UE 802. In an example embodiment, HTTP requests are sent at 814. HTTP requests may include the browser agent, allowing the OS of the UE 802 to be identified and the corresponding applet version to be selected by the OP 806 and sent to the UE 802 (at 816).

Network-assisted authentication may be performed at 818. As described herein with respect to Figure 3, the network-assisted authentication may follow a redirection to the OP 806 by the RP 804. The redirect may be received by the supplicant 820, which may redirect the message to the SSO subsystem 308 for selection of the network-assisted authentication module and/or protocol (*e.g.,* authentication module 800). The network-assisted authentication module/protocol (*e.g.,* SSO protocol) may be selected and used by the SSO subsystem via policy implementation. This process may include bootstrapping and shared key establishment as further described herein.

As shown in Figures 2, 4, 6, and 7, several network-assisted authentication protocol modules may be implied by the suite of network-assisted authentication modules *(e.g.,* SSO protocols). Referring again to Figure 8, at 822, an authentication result from the authentication at 818 may be sent from the supplicant 820 to the OP 806. For example, the authentication result may comprise an application specific key or the like shared between the UE 802 and the OP 806. After successful network-assisted authentication, the OP 806 may provide an indication to the RP 804 that the network-assisted authentication was successful. For example, the OP 806 may sign an identity assertion at 824 and send the assertion message at 824. The signed notification of successful network-assisted authentication may be performed before the UE 802 gains access to the desired service at the RP 804. Once the RP 804 and/or the UE 802 *(e.g.,* via an application) have received an indication that the network-assisted authentication was successful, the UE 802 *(e.g.,* via an application) may log on to the RP 804 (at 826) and access the services at the RP 804 (at 828).

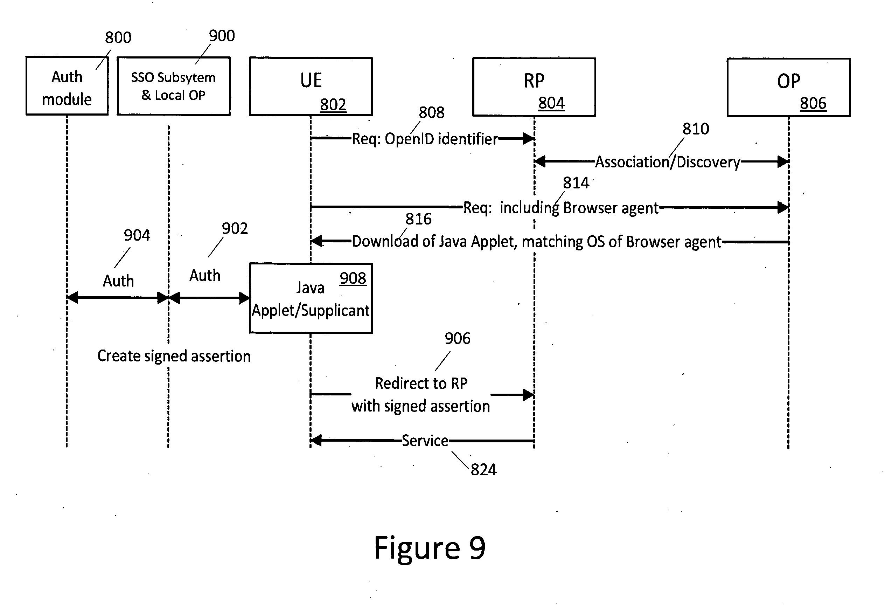

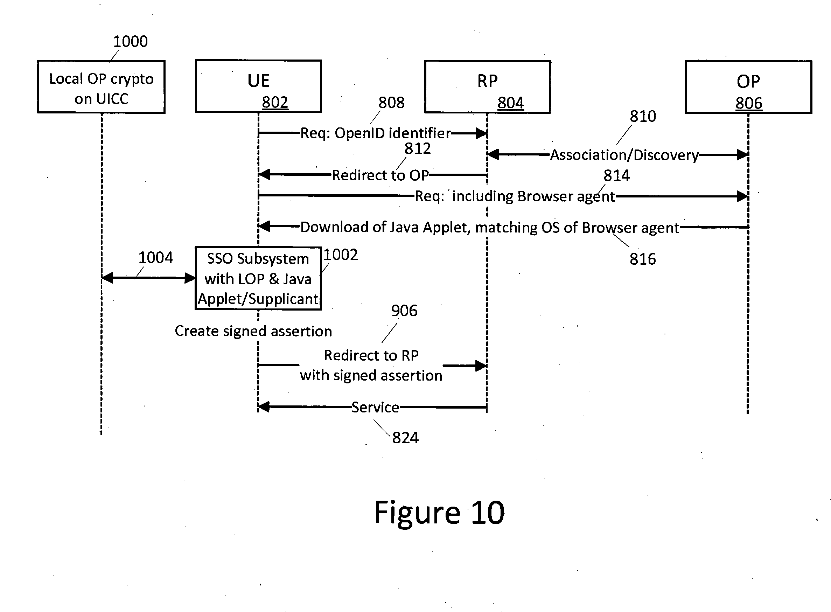

Figure 9 illustrates an example embodiment in which functions of an identity provider are performed locally to the UE 802. For example, a UE 802 may comprise an SSO subsystem and LAE *(e.g.,* local OP 900). Steps 808, 810, 814, and 816 may proceed as described with respect to Figure 8. At 902 and 904, a signed assertion may be created via interaction between the supplicant 908 and the SSO subsystem 900, and the SSO subsystem 900 and one or more authentication modules 800. The UE 802 may send the signed assertion to the RP 804, at 906. After the RP receives the signed assertion, a user of the UE 802 may be able to access services provided by the RP 804 (at 824). Figure 10 illustrates an example embodiment in which an SSO subsystem is implemented in a Java Applet 1002. Referring to Figure 10, the SSO subsystem 1002 may perform network-assisted authentication using local OP crypto on a UICC 1000. After successful network-assisted authentication, a signed assertion may be created and redirected to the RP 804.

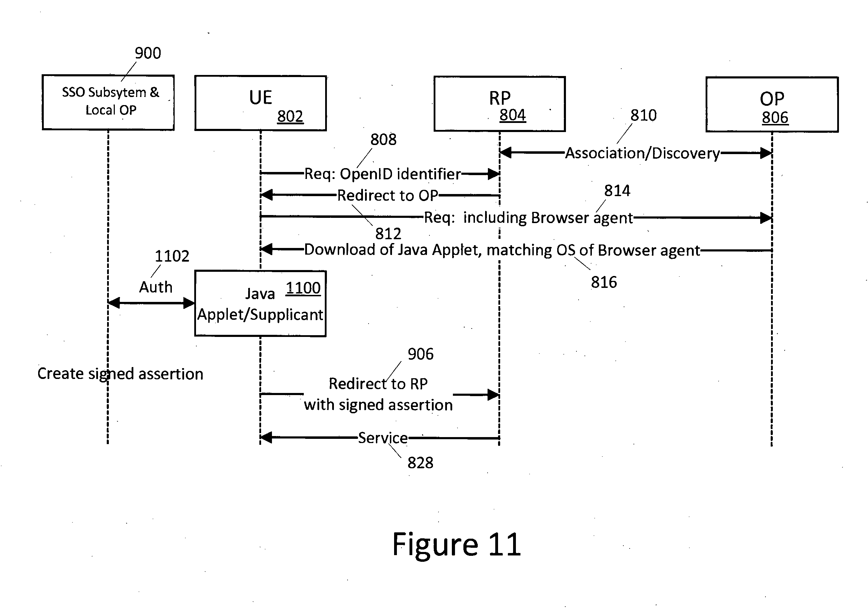

As described herein *(e.g.,* Figures 11 to 15), a LAE *(e.g.,* a local OP) may be integrated in a Java applet or may be separate from a Java applet. In an alternate example embodiment, the OpenID protocol, for example, may be implemented without a local OP component. In such an embodiment, the first part of the protocol flow may look the same, or similar, to an embodiment having a LAE, but the authentication and/or assertion generation may be done by communication between a UE and an OP *(e.g.,* shown in Figure 16).

Figure 11 illustrates an example embodiment of a protocol flow for pre-fetching associations. For example, associations may be pre-fetched, which may allow RPs to retrieve associations (*e.g.,* association handle and/or association secrets) prior to an authentication attempt from a user. This may be implemented, for example, by using the identifier select mode of OpenID. The RP may not need to know the full OpenID identifier URL, but may pre-fetch associations for some known OPs, for example, based on their OP endpoint URL. Referring to Figure 11, an RP 804 may get associations, at 810, before knowing the identifier of the UE 802. The RP 804, at 812, may directly redirect the UE 802 to the OP 806, for example, by using one of the pre-fetched associations. In such an embodiment, the UE 802 may download the Java applet 1100 from the OP 806, which may create traffic on the interface between the UE 802 and the OP 806. In an example embodiment, the UE 802 to OP 806 interface may be an air interface while the interface between the RP 804 and the OP 806 may be a fixed internet.

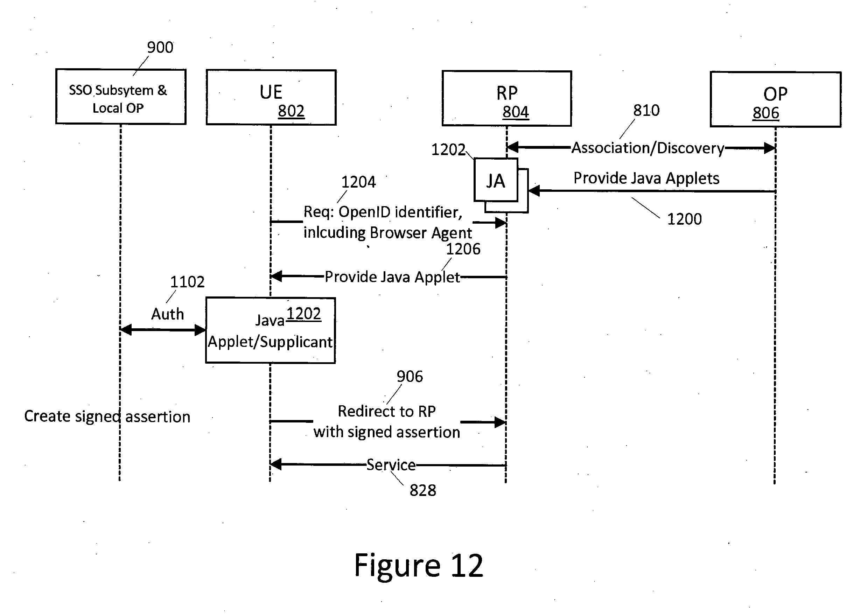

In an example embodiment of a pre-fetch step, Java applets may be stored by the RP as illustrated in Figure 12. The RP 804 may receive a set of Java applets 1202 that are signed by the OP 806. The RP 804 may store the Java applets 1202 with the associations from 810. When the UE 802 wants to authenticate at 1204, for example, the RP 804 may provide a corresponding Java applet 1202 to the UE 802 at 1206. Multiple and/or different Java applets may be used for different devices, for example, so that they match the processor and OS of the non-browser application or browser agent.

According to an example embodiment, an OpenID Library, for example, may be outsourced to an OP. For example, the OP may provide an API for RPs to handle OpenID specific operations for the RP. The Google Identity Toolkit is an example implementation that may generalize the functionality of the RP on the UE, and may provide a common framework for multiple RPs that may use the same supplicant. The RP may request the API to initiate an OpenID authentication, and the API (provided/hosted by the OP) may return code to be sent from the RP to the UE to initiate UE authentication. After that, the UE result may be sent back to the RP, which may verify the authentication result *(e.g.,* on its own or with the help of the OP). In an example embodiment, the pre-fetch of associations may save (reduce) communications between the UE and the OP, and may enable an offline scenario.

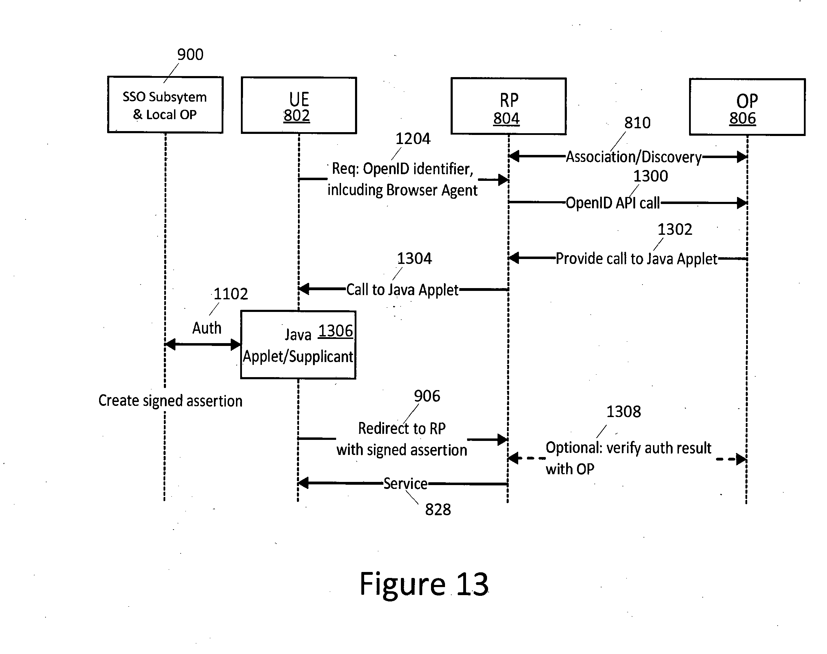

Figure 13 illustrates another embodiment of a protocol flow for a cached Java applet. For example, a Java applet 1306 or the like may be stored on the UE 802, such as a smart phone. In an example embodiment, the Java applet 1306 may be stored in a browser cache of the UE 802 from a previous run. In such an embodiment, the stored Java applet may be called. For example, if it is assumed that the applet is not available in the browser cache, a browser might delete downloaded Java applets without notice. Previously downloaded Java applets may be called, for example, when the applets are called from the same origin (*e.g.,* same RP). The API provided by the OP may return code, at 1300, which issues a call to the previously downloaded (and cached) Java applet. At 1302, for example, the call to the Java Applet 1306 is provided to the RP 804. At the 1304, the call is provided to the UE 802. Embodiments described herein may use alternate implementations such as JavaScript.

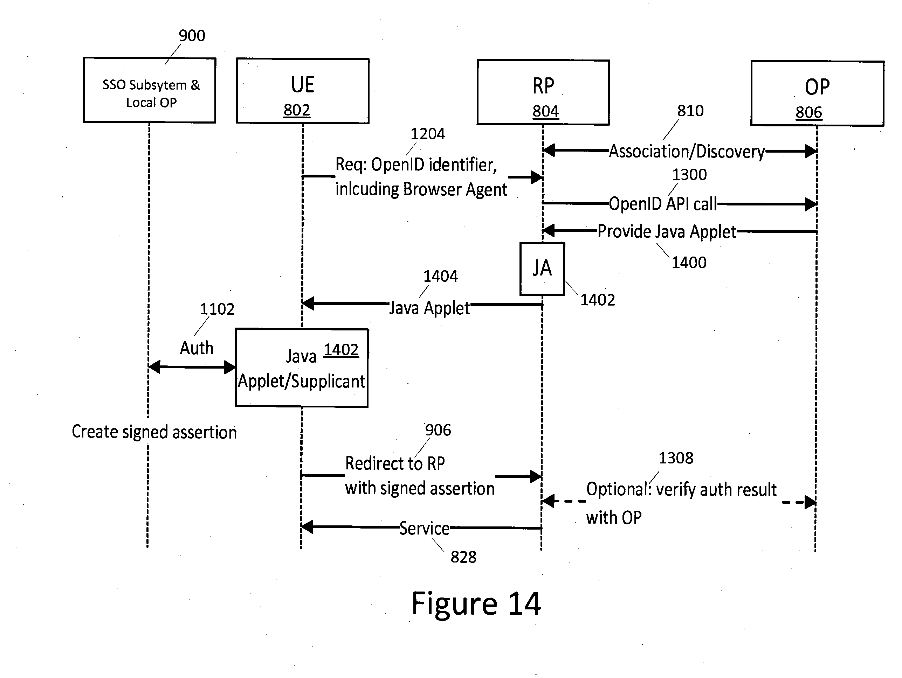

Figure 14 illustrates an example embodiment in which Java applets are provisioned on the fly. According to an example embodiment, the browser may not store the Java applet in the cache. In such an embodiment, the applet 1402 may be provided by the OP 806 to the RP 804 (at 1400), and the RP 804 may pass it on to the UE 802, at 1404. Since HTTP requests may include the browser agent, the OS of the UE 802 may be identified and the corresponding applet version may be sent to the UE 802. Here, the RP 804 may pass on the UE string (*e.g.,* comprising the OS and/or browser agent) to the OP 806 in the API call 1300 for the OP 806, for example, to select the correct Java applet version.

As described herein, various embodiments may use OpenID or the like to access services with a browser application. OpenID may be based on the HTTP protocol and/or Java applets may implement a Java Runtime. In an example embodiment, a browser may use both HTTP protocol and the Java Runtime environment. The use of OpenID and/or the other concepts presented herein is not to be limited to browser applications. As described herein, various embodiments may use non-browser applications to implement OpenID protocols or the like. For those applications, the same concepts may apply. Embodiments with non-browser applications may provide interfaces and/or methods to support download and execution of Java applets. Although the descriptions herein may use the term browser for the description of the various protocol flows, the flows are not so limited and include non-browser applications.

Although various embodiments are described as implementing a Java applet, such embodiments are not so limited. The Java applet described herein represents a single implementation variant for the download of a component *(e.g.,* supplicant) which may facilitate the authentication communication inside a device between the service accessing application (*e.g.,* browser/non-browser) and the authentication module *(e.g.,* OP, Local OP, GBA, AKA.). For example, embodiments described herein may be implemented by a component such as library or API which may be loaded out of band or dynamically downloaded to a wireless device. The downloaded component (*e.g.,* applet, library) may be specific for the application, in the sense that the application may know how to handle the component *(e.g.,* how to load it, which functions to call).

The Google Identity Toolkit (GITkit) may provide several capabilities and features, which may enable ease of integration and/or implementation of the RP function. On the network side, the RP function may be further enhanced for ease of adoption of the OpenID federated identity protocol by service providers, for example, by including the network side supplicant function rollout features. On the client side, Java script may provide some of the elements used to generalize the supplicant functions and align them with the GITkit, such as, for example, embodiments which use scraping to perform the user automation.

Various embodiments described herein may integrate the concept of the LAE *(e.g.,* local OP) with the Google Identity Toolkit, while remaining compliant to the regular call flow provided by the user of the GTTkit. For example, described herein are several different ways that the local OP may be called and the browser may be redirected to the local OP. In an example embodiment, redirection may be applied to the URL of the OP, where the device may want to know where to reach the local OP. In another example embodiment, the website provided by the GITkit API may provide a call *(e.g.,* via JavaScript) to an OS API which may trigger the local OP authentication process, for example, without redirecting the browser to the local OP. In yet another example embodiment, a browser plugin may be called instead of an OS API.

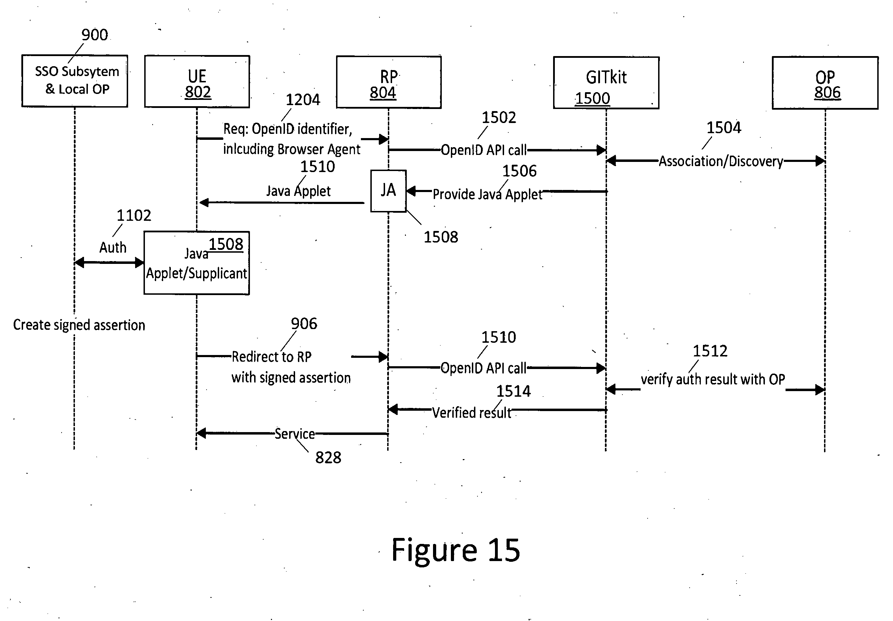

Figure 15 illustrates an example embodiment in which a GITkit 1500 may be integrated with the local OP 900 and a Java applet 1508. Exemplary integration steps are listed below, although the embodiments described herein are not so limited, as other implementations may be used, including those that cater to non-browser applications, for example.

Referring to Figure 15, a user may visit the RP 804 and/or select his IdP or enter his email address identifier. In one example embodiment, the identifier may be pre-filled *(e.g.,* using existing technology such as the browser stored form data or cookies), for example, to provide for automation of the authentication process and triggered by the user entering a URL into the browser. A GITkit library function "createAuthUrl" may be called. The GITkit library may perform IdP discovery. The GITkit may return the IdP's authorization endpoint URL *(e.g.,* URL of the OP 806). The JavaScript widget may pop up the login window, redirecting the user to that endpoint. The redirection in that popup window may take the user to the local OP instance running on the device. The local OP instance may, for example, consist of an application providing an HTTP interface and webserver like capabilities towards the browser, while integrating an interface to the SIM card or other secure element where the cryptographic functions of the local OP are executed. In an alternative embodiment, the JavaScript may not use the redirect but may be able to call an OS API (at 1502) to trigger the local OP authentication directly from the script. For example, if the local OP application resides on the SIM card, the JavaScript may potentially call an OS API (*e.g.,* Simalliance OpenMobile API) to directly communicate with the local OP application on the smart card. Other embodiments may not use a pure JavaScript solution. In these embodiments, the browser may contain a plugin, which may be called by the JavaScript to trigger the local OP authentication. This plugin may make use of some OS API which, for example, may provide the transport layer logic for communication between OS application layer and/or the local OP application on the secure element. In other embodiments, the GITkit API may provide the RP, after the first call, with code which may allow the download of the Java applet into the UE. The Java applet may perform authentication using the local OP as described herein. Embodiments may pre-fill the credentials (*e.g.,* using existing technology such as the browser stored form data, cookies, etc.) to provide for automation of the authentication process triggered by the UE receiving a re-direct to the local OP.

At 1102, the user may be authenticated locally to the local OP. The local OP may derive the OpenID signature secret from the long term shared secret with the OP(SF) in the network and use the association handle as second input to a key derivation function to create a signing key for OpenID. The local OP/JavaScript/plugin may create the signed assertion message and redirect the browser to the formerly created "continueURL" at the RP, which may have been created by the "createAuthUrl" GITkit library call. The RP may receive the signed assertion message (at 906) and pass it to the GITkit library for verification at 1510. The GITkit 1500 may use the "verifyAssertion" API to validate the assertion message with the OP(SF) at 1512. Since the GITkit library may be hosted by Google, the GITkit library may use the OPSF for signature verification. The OPSF may return the identity information (such as email, or other attributes as defined by the attribute exchange methods of OpenID for example). If that account/email already exists, the user may be logged in. If not, the RP may create a new account using the asserted email address as an unchangeable identifier for the user. Additional attributes may be auto filled based on the information received with the attribute exchange mechanisms.

As additional background, an overview of the GITkit protocol flow may be found at http://code.google.com/intl/de-DE/apis/identitytoolkit/vl/openid.html. The regular GITkit protocol flow might be summarized as follows.

A user may visit an RP website and may click the button of his IdP. The RP may build a call to the GITkit service API, which in turn may perform the discovery steps and return the callback URL, which the RP may have to set up to wait for the return of the user and the GITkit returns the HTML code which is to be displayed to the user in order to authenticate with the IdP. This HTML code may contain the redirection to the authentication URL of the IdP. This code may also create the same user interface for RPs. The user authenticates towards his IdP. The user may be redirected to the callbackURL at the RP. The RP may use the parameters (IdP response) received at the callbackURL to make a call to the Grit API (verifyAssertion). The GITkit API may verify the IdP response and sends the result (verified email + additional attributes) to the RP.

GITkit may expose the OpenID/OAuth protocol by providing at least two APIs that the RP may call in two steps, illustrated below:

One step may include a createAuthUrl API call. This API call may happen when user clicks on the IDP icons (*i.e.,* Gmail, Yahoo buttons) or enters an email address directly for example. The GITkit backend may perform IDP discovery, according to OpenID 2.0 protocol for example. If the IDP actually uses OAuth protocol, then GITkit may use predefined IDP endpoint directly. The end result may be that GITkit returns the URI (parameter "authUri") which may represent the IDP's authorization endpoint, and the GITkit login widget may pop up a login window which may redirect to that endpoint. (This step may correspond to the first redirect of the normal OpenID protocol, where the browser is redirected to the OP. By using the same mechanism as before with local OP, the user's browser may be redirected to the local OP instead at this stage). When calling createAuthUrl, the RP may pass in the "continueUrl" (*i.e*., the callback URL) which is the URL that may be redirected to after user has successfully authenticated by the corresponding IDP. The "realm" may be an optional parameter that identifies OpenID's realm, while the "identifier" may specify which IDP to use.

Another step may include a verifyAssertion. After the IDP has successfully authenticated the user, (this may refer to the actual user authentication, which may be done locally if a local OP is used) it may redirect the browser to the URL that is specified in createAuthUrl's "continueUrl" parameter with the user's identity information signed with its secret key. According to an embodiment, this may be similar to a binary blob that may not be processed, and it may be sent back to GITkit for validation. This may be the second redirect in OpenID from the OP to the RP. This may be used with local OP. The HTTP request for the callback URL may be captured by the GITkit client library in RP's backend, and the client library may call the GITkit's verifyAssertion API with "requestUri" (the URI the IDP returns) and "postBody" (the signed blob by IDP). The GITkit backend may validate the IDP response using OpenID protocol, and may return the identity information (also attributes associated with that identity if AX is used for example) to RP's backend. This step may correspond to the assertion signature verification of normal OpenID. This may be similar to the stateless mode of OpenID for example. The GITkit library may contact the OP (*e.g.,* in the network) again to verify the signature and request additional attributes (*e.g.,* the email address). RP may inspect the "verifiedEmail" field, and make according actions. For example, if the account with that email address is valid, the user may be logged in, and/or the JavaScript widget may close the login window, and/or redirect the user's browser to the RP's home page. If there is no account found for that email, the RP may redirect the user to the account creation page, with email field prefilled and uneditable for example, together with other attributes for the accounts filled in.

For OAuth based IDP authentication, the RP may use the same, or similar, calls and get the same, or similar, response back from GITkit. But GITkit may use OAuth protocol in its backend to communicate with IDP and do the right processing, such as exchanging for access tokens for example. The GITkit API Endpoint receives requests for GITkit API calls, authenticates the user (usually using the API Key), and calls the GITkit server with the right parameters. The GITkit server may contact the corresponding IDP to complete the OpenID/OAuth calls.

Although the example embodiments described herein are carried out in the context of OpenID, the techniques described above may be applied to any number of single sign-on security protocols, such as Liberty Alliance. Additionally, while the various embodiments have been described in connection with the various figures, it is to be understood that other similar embodiments may be used or modifications and additions may be made to the described embodiment for performing the same function of the various embodiments without deviating there from. Therefore, the embodiments should not be limited to any single embodiment, but rather should be construed in breadth and scope in accordance with the appended claims.

It is understood that any or all of the systems, methods and processes described herein may be embodied in the form of computer or processor executable instructions (*i.e.,* program code, software and/or firmware) stored on a computer-readable storage medium which instructions, when executed by a machine, such as a processor, perform and/or implement the systems, methods and processes described herein. Specifically, any of the steps, operations or functions described above may be implemented in the form of such executable instructions. Computer readable storage media include both volatile and nonvolatile, removable and non-removable media implemented in any method or technology for storage of information. Computer readable storage media include, but are not limited to, RAM, ROM, EEPROM, flash memory or other memory technology, CDROM, digital versatile disks (DVD) or other optical disk storage, magnetic cassettes, magnetic tape, magnetic disk storage or other magnetic storage devices, or any other medium which can be used to store the desired information and which can be accessed by a computer or processor.

## Claims

1. A user equipment, UE, (102) comprising:
a user application (202, 204; 306; 404) configured to communicate with a service provider (406) to access a service;
a plurality of network-assisted authentication modules (208-216), each network-assisted authentication module corresponding to a different network-assisted authentication protocol, and wherein one or more of the plurality of network-assisted authentication modules are configured to perform network-assisted authentication with the service provider to access the service;
**characterised by**
a single sign-on, SSO, subsystem (206; 308) configured to authenticate a user of the UE based on user-assisted authentication information and to select a network-assisted authentication module of the plurality of network-assisted authentication modules for performing the network-assisted authentication with the service provider, and wherein the SSO subsystem is further configured to perform the user-assisted authentication and select the network-assisted authentication module based on one or more policies that indicate at least one of a user-assisted authentication strength associated with the user-assisted authentication or a network-assisted authentication strength associated with the network-assisted authentication.

2. The UE of claim 1, wherein the user-assisted authentication information comprises at least one of a user identity or a user credential, and wherein the SSO subsystem is configured to perform the user-assisted authentication using the user identity, and wherein the UE is configured to perform the network-assisted authentication using a UE identity.

3. The UE of claim 1, wherein the network-assisted authentication is performed by sending an assertion message to the service provider that indicates that the user is authenticated.

4. The UE of claim 1, wherein the SSO subsystem (206; 308) is further configured to perform the network-assisted authentication using at least one parameter resulting from the user-assisted authentication.

5. The UE of claim 4, wherein the at least one parameter resulting from the user-assisted authentication comprises a user-assisted authentication status, a user-assisted authentication time, or the user-assisted authentication strength.

6. The UE of claim 1, wherein the SSO subsystem (206; 308) is further configured to receive a selection of an identity provider (312) to be used for the network-assisted authentication, wherein the identity provider is associated with an authentication module of the plurality of network-assisted authentication modules.

7. The UE of claim 1, wherein the UE is configured to support services provided by a plurality of service providers (406), each service provider being associated with a different set of policies.

8. The UE of claim 1, further comprising a supplicant that enables the communication from the application to the plurality of network-assisted authentication modules (208-216).

9. The UE of claim 8, wherein the supplicant is included in the SSO subsystem (206; 308).

10. The UE of claim 8, wherein the supplicant is downloaded from at least one of the service provider (406) or an identity provider (312).

11. The UE of claim 8, wherein the supplicant is configured to allow the user application to use one or more features of the SSO subsystem (206; 308).

12. The UE of claim 8, wherein the supplicant corresponds to the user application such that the supplicant can communicate with the user application (202, 204; 306; 404) and the SSO subsystem (206; 308).

13. Method carried out in a user equipment, UE (102), comprising a plurality of network-assisted authentication modules, each network-assisted authentication module corresponding to a different network-assisted authentication protocol, and wherein one or more of the plurality of network-assisted authentication modules are configured to perform network-assisted authentication with a service provider (406) to access a service, the method **characterised by** the steps of:
authenticating a user of the UE based on user-assisted authentication information;
selecting a network-assisted authentication module of the plurality of network-assisted authentication modules for performing the network-assisted authentication with the service provider; and
performing the user-assisted authentication and selecting the network-assisted authentication module based on one or more policies that indicate at least one of a user-assisted authentication strength associated with the user-assisted authentication or a network-assisted authentication strength associated with the network-assisted authentication.

14. The method of claim 13, further comprising:
detecting, by the UE (102), one or more data fields of the service provider (406); and
in response to the detection, populating the one or more data fields with corresponding authentication data.

15. The method of claim 13, further comprising:
performing the network-assisted authentication based on at least one parameter from the user-assisted authentication.

16. The method of claim 15, wherein the at least one parameter resulting from the user-assisted authentication comprises a user-assisted authentication status, a user-assisted authentication time, or the user-assisted authentication strength.

17. The method of claim 13, further comprising,
in response to the user-assisted authentication, downloading a supplicant for authenticating the user with the service provider (406), wherein the supplicant matches a user application of the UE (102).

## Patentansprüche

1. Benutzergerät UE (102), Folgendes umfassend:
eine Benutzeranwendung (202, 204; 306; 404), die zum Kommunizieren mit einem Dienstanbieter (406) zum Zugriff auf einen Dienst konfiguriert ist;
mehrere netzunterstützte Authentifizierungsmodule (208 - 216), wobei jedes netzunterstützte Authentifizierungsmodul einem anderen netzunterstützten Authentifizierungsprotokoll entspricht, und wobei eines oder mehrere der mehreren netzunterstützten Authentifizierungsmodule dazu konfiguriert ist bzw. sind, eine netzunterstützte Authentifizierung beim Dienstanbieter zum Zugriff auf den Dienst durchzuführen;
gekennzeichnet durch ein Subsystem (206; 308) zum einmaligen Anmelden SSO (*single sign-on*), das dazu konfiguriert ist, einen Benutzer des UE auf Grundlage von benutzerunterstützter Authentifizierungsinformation zu authentifizieren und ein netzunterstütztes Authentifizierungsmodul der mehreren netzunterstützten Authentifizierungsmodule auszuwählen, um die netzunterstützte Authentifizierung beim Dienstanbieter durchzuführen, und wobei das SSO-Subsystem darüber hinaus zum Durchführen der benutzerunterstützten Authentifizierung und zum Auswählen des netzunterstützten Authentifizierungsmoduls auf Grundlage einer oder mehrerer Strategie/n konfiguriert ist, die eine benutzerunterstützte Authentifizierungsstärke, die mit der benutzerunterstützten Authentifizierung zusammenhängt, und/oder eine netzunterstützte Authentifizierungsstärke angibt bzw. angeben, die mit der netzunterstützten Authentifizierung zusammenhängt.

2. UE nach Anspruch 1, wobei die benutzerunterstützte Authentifizierungsinformation eine Benutzerkennung und/oder eine Benutzerberechtigung umfasst, und wobei das SSO-Subsystem zum Durchführen der benutzerunterstützten Authentifizierung anhand der Benutzerkennung konfiguriert ist, und wobei das UE zum Durchführen der netzunterstützten Authentifizierung anhand einer UE-Kennung konfiguriert ist.

3. UE nach Anspruch 1, wobei die netzunterstützte Authentifizierung erfolgt, indem eine Erklärungsnachricht an den Dienstanbieter geschickt wird, die angibt, dass der Benutzer authentifiziert ist.

4. UE nach Anspruch 1, wobei das SSO-Subsystem (206; 308) darüber hinaus zum Durchführen der netzunterstützten Authentifizierung anhand mindestens eines Parameters konfiguriert ist, der sich aus der benutzerunterstützten Authentifizierung ergibt.

5. UE nach Anspruch 4, wobei der mindestens eine Parameter, der sich aus der benutzerunterstützten Authentifizierung ergibt, einen benutzerunterstützten Authentifizierungsstatus, eine benutzerunterstützte Authentifizierungszeit oder die benutzerunterstützte Authentifizierungsstärke umfasst.

6. UE nach Anspruch 1, wobei das SSO-Subsystem (206; 308) darüber hinaus zum Empfangen einer Auswahl eines für die netzunterstützte Authentifizierung zu verwendenden Kennungsbereitstellers (312) konfiguriert ist, wobei der Kennungsbereitsteller mit einem Authentifizierungsmodul der mehreren netzunterstützten Authentifizierungsmodule zusammenhängt.

7. UE nach Anspruch 1, wobei das UE zum Unterstützen von durch mehrere Dienstanbieter (406) bereitgestellten Diensten konfiguriert ist, wobei jeder Dienstanbieter mit einem anderen Satz an Strategien zusammenhängt.

8. UE nach Anspruch 1, darüber hinaus eine Antragstellerfunktion umfassend, die die Kommunikation von der Anwendung zu den mehreren netzunterstützten Authentifizierungsmodulen (208 - 216) ermöglicht.

9. UE nach Anspruch 8, wobei die Antragstellerfunktion im SSO-Subsystem (206; 308) enthalten ist.

10. UE nach Anspruch 8, wobei die Antragstellerfunktion vom Dienstanbieter (406) und/oder einem Kennungsbereitsteller (312) her heruntergeladen wird.

11. UE nach Anspruch 8, wobei die Antragstellerfunktion dazu konfiguriert ist, die Benutzeranwendung ein oder mehrere Merkmal/e des SSO-Subsystems (206; 308) nutzen zu lassen.

12. UE nach Anspruch 8, wobei die Antragstellerfunktion der Benutzeranwendung entspricht, so dass die Antragstellerfunktion mit der Benutzeranwendung (202, 204; 306; 404) und dem SSO-Subsystem (206; 308) kommunizieren kann.

13. Verfahren, das in einem Benutzergerät UE (102) ausgeführt wird, das mehrere netzunterstützten Authentifizierungsmodule umfasst, wobei jedes netzunterstützte Authentifizierungsmodul einem anderen netzunterstützten Authentifizierungsprotokoll entspricht, und wobei eines oder mehrere der mehreren netzunterstützten Authentifizierungsmodule dazu konfiguriert ist bzw. sind, eine netzunterstützte Authentifizierung beim Dienstanbieter zum Zugriff auf einen Dienst durchzuführen, wobei das Verfahren durch die folgenden Schritte gekennzeichnet ist:
Authentifizieren eines Benutzers des UE anhand von benutzerunterstützter Authentifizierungsinformation;
Auswählen eines netzunterstützten Authentifizierungsmoduls der mehreren netzunterstützten Authentifizierungsmodule, um die netzunterstützte Authentifizierung beim Dienstanbieter durchzuführen; und
Durchführen der benutzerunterstützten Authentifizierung und Auswählen des netzunterstützten Authentifizierungsmoduls auf Grundlage einer oder mehrerer Strategie/n, die eine benutzerunterstützte Authentifizierungsstärke, die mit der benutzerunterstützten Authentifizierung zusammenhängt, und/oder eine netzunterstützte Authentifizierungsstärke angibt bzw. angeben, die mit der netzunterstützten Authentifizierung zusammenhängt.

14. Verfahren nach Anspruch 13, darüber hinaus umfassend:
Erfassen eines Datenfelds oder mehrerer Datenfelder des Dienstanbieters (406) durch das UE (102); und
Besetzen des einen Datenfelds oder der mehreren Datenfelder mit entsprechenden Authentifizierungsdaten im Ansprechen auf die Erfassung.

15. Verfahren nach Anspruch 13, darüber hinaus umfassend:
Durchführen der netzunterstützten Authentifizierung auf Grundlage mindestens eines Parameters aus der benutzerunterstützten Authentifizierung.

16. Verfahren nach Anspruch 15, wobei der mindestens eine Parameter, der sich aus der benutzerunterstützten Authentifizierung ergibt, einen benutzerunterstützten Authentifizierungsstatus, eine benutzerunterstützte Authentifizierungszeit oder die benutzerunterstützte Authentifizierungsstärke umfasst.

17. Verfahren nach Anspruch 13, darüber hinaus umfassend:
Herunterladen einer Antragstellerfunktion zum Authentifizieren des Benutzers beim Dienstanbieter (406), wobei die Antragstellerfunktion mit einer Benutzeranwendung des UE (102) übereinstimmt.

## Revendications

1. Équipement d'utilisateur (*user equipment,* UE) (102) comprenant :
une application d'utilisateur (202, 204 ; 306 ; 404) configurée pour communiquer avec un fournisseur de service (406) pour accéder à un service ;
une pluralité de modules d'authentification assistée par réseau (208-216), chaque module d'authentification assistée par réseau correspondant à un protocole d'authentification assistée par réseau différent, et dans lequel un ou plusieurs de la pluralité de modules d'authentification assistée par réseau sont configurés pour effectuer une authentification assistée par réseau avec le fournisseur de service pour accéder au service ;
**caractérisé en ce qu'**un sous-système de signature unique (*single sign-on*, SSO) (206 ; 308) configuré pour authentifier un utilisateur de l'UE sur la base d'informations d'authentification assistée par utilisateur et pour sélectionner un module d'authentification assistée par réseau de la pluralité de modules d'authentification assistée par réseau afin d'effectuer l'authentification assistée par réseau avec le fournisseur de service, et sachant que le sous-système SSO est en outre configuré pour effectuer l'authentification assistée par utilisateur et sélectionner le module d'authentification assistée par réseau sur la base d'une ou de plusieurs politiques indiquant au moins l'une d'une force d'authentification assistée par utilisateur associée à l'authentification assistée par utilisateur ou d'une force d'authentification assistée par réseau associée à l'authentification assistée par réseau.

2. L'UE de la revendication 1, dans lequel les informations d'authentification assistée par utilisateur comprennent au moins l'un d'une identité d'utilisateur ou d'un justificatif d'utilisateur, et dans lequel le sous-système SSO est configuré pour effectuer l'authentification assistée par utilisateur au moyen de l'identité d'utilisateur, et dans lequel l'UE est configurée pour effectuer l'authentification assistée par réseau au moyen d'une identité d'UE.

3. L'UE de la revendication 1, dans lequel l'authentification assistée par réseau est effectuée en envoyant au fournisseur de service un message d'affirmation indiquant que l'utilisateur est authentifié.

4. L'UE de la revendication 1, dans lequel le sous-système SSO (206 ; 308) est en outre configuré pour effectuer l'authentification assistée par réseau au moyen d'au moins un paramètre résultant de l'authentification assistée par utilisateur.

5. L'UE de la revendication 4, dans lequel l'au moins un paramètre résultant de l'authentification assistée par utilisateur comprend un état d'authentification assistée par utilisateur, une heure d'authentification assistée par utilisateur, ou la force d'authentification assistée par utilisateur.

6. L'UE de la revendication 1, dans lequel le sous-système SSO (206 ; 308) est en outre configuré pour recevoir une sélection d'un fournisseur d'identité (312) destiné à être utilisé pour l'authentification assistée par réseau, sachant que le fournisseur d'identité est associé à un module d'authentification de la pluralité de modules d'authentification assistée par réseau.

7. L'UE de la revendication 1, dans lequel l'UE est configuré pour prendre en charge des services fournis par une pluralité de fournisseurs de service (406), chaque fournisseur de service étant associé à un ensemble différent de politiques.

8. L'UE de la revendication 1, comprenant en outre un demandeur qui autorise la communication depuis l'application vers la pluralité de modules d'authentification assistée par réseau (208-216).

9. L'UE de la revendication 8, dans lequel le demandeur est inclus dans le sous-système SSO (206 ; 308).

10. L'UE de la revendication 8, dans lequel le demandeur est téléchargé depuis au moins l'un du fournisseur de service (406) ou d'un fournisseur d'identité (312).

11. L'UE de la revendication 8, dans lequel le demandeur est configuré pour permettre à l'application d'utilisateur d'utiliser une ou plusieurs caractéristiques du sous-système SSO (206 ; 308).

12. L'UE de la revendication 8, dans lequel le demandeur correspond à l'application d'utilisateur de telle sorte que le demandeur puisse communiquer avec l'application d'utilisateur (202, 204 ; 306 ; 404) et le sous-système SSO (206 ; 308).

13. Procédé mis en oeuvre dans un équipement d'utilisateur (*user equipment,* UE) (102), comprenant une pluralité de modules d'authentification assistée par réseau, chaque module d'authentification assistée par réseau correspondant à un protocole d'authentification assistée par réseau différent, et dans lequel un ou plusieurs de la pluralité de modules d'authentification assistée par réseau sont configurés pour effectuer une authentification assistée par réseau avec un fournisseur de service (406) pour accéder à un service, le procédé étant **caractérisé par** les étapes consistant à :
authentifier un utilisateur de l'UE sur la base d'informations d'authentification assistée par utilisateur ;
sélectionner un module d'authentification assistée par réseau de la pluralité de modules d'authentification assistée par réseau afin d'effectuer l'authentification assistée par réseau avec le fournisseur de service ; et
effectuer l'authentification assistée par utilisateur et sélectionner le module d'authentification assistée par réseau sur la base d'une ou de plusieurs politiques indiquant au moins l'une d'une force d'authentification assistée par utilisateur associée à l'authentification assistée par utilisateur ou d'une force d'authentification assistée par réseau associée à l'authentification assistée par réseau.

14. Le procédé de la revendication 13, comprenant en outre :
le détection, par l'UE (102), d'un ou de plusieurs champs de données du fournisseur de service (406) ; et
en réponse à la détection, le fait de garnir l'un ou les plusieurs champs de données avec des données d'authentification correspondantes.

15. Le procédé de la revendication 13, comprenant en outre :
le fait d'effectuer l'authentification assistée par réseau sur la base d'au moins un paramètre provenant de l'authentification assistée par utilisateur.

16. Le procédé de la revendication 15, dans lequel l'au moins un paramètre résultant de l'authentification assistée par utilisateur comprend un état d'authentification assistée par utilisateur, une heure d'authentification assistée par utilisateur, ou la force d'authentification assistée par utilisateur.

17. Le procédé de la revendication 13, comprenant en outre,
en réponse à l'authentification assistée par utilisateur, le téléchargement d'un demandeur afin d'authentifier l'utilisateur avec le fournisseur de service (406), sachant que le demandeur concorde avec une application d'utilisateur de l'UE (102).
